# EUROPEAN PATENT SPECIFICATION

(11) **EP 3 851 829 B1**
(45) Date of publication and mention of the grant of the patent: **29.05.2024**
(21) Application number: 19859306.3
(22) Date of filing: 08.07.2019
(51) Int. Cl.: G01N 15/14, G01N 15/10

(54) **CHANNEL UNIT FOR FINE PARTICLE ISOLATION AND FINE PARTICLE ISOLATION DEVICE**
KANALEINHEIT ZUR ISOLIERUNG FEINER PARTIKEL UND ISOLIERUNG VON FEINEN PARTIKELN
UNITÉ DE CANAL POUR ISOLEMENT DE PARTICULES FINES ET DISPOSITIF D'ISOLEMENT DE PARTICULES FINES

(30) Priority: 10.09.2018 JP 2018168696
(43) Date of publication of application: 21.07.2021
(73) Proprietor: Sony Group Corporation, Tokyo 108-0075 (JP)
(72) Inventor: TAKAHASHI, Kazuya, Tokyo 108-0075 (JP); KATSUMOTO, Yoichi, Tokyo 108-0075 (JP)
(74) Representative: D Young & Co LLP
(86) International application number: PCT/JP2019/027035
(87) International publication number: WO 2020/054196

(56) References cited:
- EP-A1- 3 823 756
- WO-A1-2017/061619
- WO-A1-2017/199506
- WO-A1-2017/199506
- JP-A- 2006 090 414
- JP-A- 2009 136 789
- JP-A- 2013 032 994
- JP-A- 2017 177 083
- US-A1- 2008 213 821
- US-A1- 2017 307 502
- US-A1- 2017 315 033

## Description

### TECHNICAL FIELD

The present technology relates to a microparticle sorting flow channel unit and a microparticle sorting device. In more detail, the present technology relates to a microparticle sorting flow channel unit including two particle sorting portions, and a microparticle sorting device including the microparticle sorting flow channel unit.

### BACKGROUND ART

Various devices have been developed so far for sorting microparticles. For example, in a microparticle sorting system used in a flow cytometer, a laminar flow including a sample liquid containing cells and a sheath liquid is discharged from an orifice formed in a flow cell or a microchip. A predetermined vibration is applied to the laminar flow during discharge, whereby droplets are formed. A moving direction of the formed droplets is electrically controlled depending on whether or not target microparticles are contained, and the target microparticles are sorted.

A technology has also been developed for sorting target microparticles in a microchip without forming droplets as described above. For example, Patent Document 1 below describes "a microchip comprising: a sample liquid introduction flow channel through which a sample liquid containing microparticles flows; at least a pair of sheath liquid introduction flow channels that merges with the sample liquid introduction flow channel from both sides and introduces the sheath liquid around the sample liquid; a merging flow channel that communicates with the sample liquid introduction flow channel and the sheath liquid introduction flow channel and through which the liquids flowing through these flow channels merge and flow; a negative pressure suction portion that communicates with the merging flow channel and sucks and draws microparticles to be collected; and at least a pair of disposal flow channels that is provided on both sides of the negative pressure suction portion and communicates with the merging channel." (claim 1). In the microchip, the target microparticles are collected by suction to the negative pressure suction portion.

### CITATION LIST

### PATENT DOCUMENT

Patent Document 1: Japanese Patent Application Laid-Open No. 2012-127922
Other prior art includes US2008/213821A and WO2017/199506.

### SUMMARY OF THE INVENTION

### PROBLEMS TO BE SOLVED BY THE INVENTION

From microparticles sorted depending on presence or absence of a certain characteristic, it may be required to further sort microparticles having another characteristic. Furthermore, in a case where the microparticles sorted by one sorting process contain unintended microparticles, it can be necessary to further increase purity of the target microparticles. To meet such needs, for example, it is conceivable that, downstream of one microparticle sorting microchip, another microparticle sorting microchip is further connected. That is, it is conceivable that a liquid containing the microparticles sorted in a particle sorting portion of the former microparticle sorting microchip is introduced into the latter microparticle sorting microchip, and is subjected to microparticle sorting in a particle sorting portion of the latter microparticle sorting microchip.

However, in one microparticle sorting flow channel unit obtained by simply connecting these two microparticle sorting microchips together by, for example, a flow channel such as a tube, a flow rate in one microparticle sorting microchip can give an influence on a flow rate in the other microparticle sorting microchip. The influence makes it difficult to independently control the flow rates in the particle sorting portions in these two microparticle sorting microchips.

An object of the present technology is to provide a technology for controlling an upstream particle sorting portion and a downstream particle sorting portion independently of each other in one microparticle sorting flow channel unit.

### SOLUTIONS TO PROBLEMS

The present inventors have found that the problem described above can be solved by a flow channel unit having a specific configuration.

That is, the present technology provides a microparticle sorting flow channel unit according to claim 1.

The fluid storage container is one that suppresses an influence on a flow rate in a flow channel downstream or upstream of the fluid storage container due to a flow rate fluctuation in the flow channel upstream or downstream of the fluid storage container.

According to one embodiment of the present technology, the microparticle sorting flow channel unit may include a first microparticle sorting microchip and a second microparticle sorting microchip, and
the first particle sorting portion may be provided in the first microparticle sorting microchip, and the second particle sorting portion may be provided in the second microparticle sorting microchip.

A pump may be provided between the fluid discharge port and the fluid supply port, and the fluid storage container may be provided upstream of the pump.

The fluid storage container can be used to independently control a flow rate of a fluid flowing through the first particle sorting portion and a flow rate of a fluid flowing through the second particle sorting portion.

The fluid storage container is used to reduce an influence due to a pulsating flow of a fluid flowing through any one particle sorting portion of the first particle sorting portion or the second particle sorting portion on a flow rate in another particle sorting portion.

In one aspect of the present technology, the microparticle sorting flow channel unit may include an upstream microparticle sorting microchip and a downstream microparticle sorting microchip, the upstream microparticle sorting microchip may be provided with the first particle sorting portion and the at least one fluid discharge port, the downstream microparticle sorting microchip may be provided with the second particle sorting portion and the at least one fluid supply port, and the fluid storage container may be provided on a flow channel fluidly connecting the fluid discharge port and the fluid supply port together.

In one aspect of the present technology, the fluid storage container may be used as a container that collects microparticles sorted in the first particle sorting portion.

In another aspect of the present technology, a microparticle collection container that collects microparticles sorted in the first particle sorting portion may be provided downstream of the fluid storage container.

In another aspect of the present technology, a volume of a fluid storage space in the microparticle collection container may be constant.

In still another aspect of the present technology, the microparticle sorting flow channel unit may include a first microparticle sorting microchip and a second microparticle sorting microchip, and
the fluid storage container may be provided in any one microchip of the two microparticle sorting microchips.

At least one particle sorting portion of the first particle sorting portion or the second particle sorting portion can include a main flow channel through which a fluid containing microparticles flows, a branch flow channel that branches from the main flow channel, and a particle sorting flow channel coaxial with the main flow channel.

The fluid storage container may be configured to be able to store a fluid of an amount greater than or equal to a value obtained by multiplying an absolute value of a difference between flow rates before and after the container by a time for which a fluid flows in the microparticle sorting flow channel unit.

Furthermore, the present technology also provides a microparticle sorting device including a microparticle sorting flow channel unit according to claim 1.

The microparticle sorting device can independently control a flow rate of a fluid flowing through the first particle sorting portion and a flow rate of a fluid flowing through the second particle sorting portion.

### BRIEF DESCRIPTION OF DRAWINGS

Fig. 1 is a diagram illustrating an example of a microparticle sorting microchip.
Fig. 2 is a diagram illustrating a particle sorting portion in the microparticle sorting microchip.
Fig. 3 is a diagram illustrating a configuration example of two microparticle sorting microchips connected together.
Fig. 4 is a diagram illustrating a configuration example of a microparticle sorting flow channel unit of the present technology.
Fig. 5 is a diagram illustrating a configuration example of a microparticle sorting flow channel unit of the present technology.
Fig. 6 is a diagram illustrating a configuration example of a microparticle sorting flow channel unit of the present technology.
Fig. 7 is a diagram illustrating a configuration example of a microparticle sorting device of the present technology.
Fig. 8 is a diagram illustrating a configuration example of a microparticle sorting flow channel unit of the present technology.
Fig. 9 is a diagram illustrating a measurement result of a flow rate.
Fig. 10 is a diagram illustrating a measurement result of a flow rate.
Fig. 11A is a schematic perspective view of the vicinity of an orifice portion of a microparticle sorting microchip.
Fig. 11B is a schematic sectional view of the orifice portion of the microparticle sorting microchip.
Fig. 12A is a schematic perspective view of the vicinity of an orifice portion of a microparticle sorting microchip.
Fig. 12B is a schematic sectional view of the orifice portion of the microparticle sorting microchip.

### MODE FOR CARRYING OUT THE INVENTION

Hereinafter, a description will be given of preferred embodiments for carrying out the present technology. Note that, the present technology will be described in the following order.
1. Related technology
2. First embodiment (microparticle sorting flow channel unit)
   (1) Description of first embodiment
   (2) First example of first embodiment (microparticle sorting flow channel unit)
   (3) Second example of first embodiment (microparticle sorting flow channel unit)
   (4) Third example of first embodiment (microparticle sorting flow channel unit)
3. Second embodiment (microparticle sorting device)
4. Example

### 1. Related technology

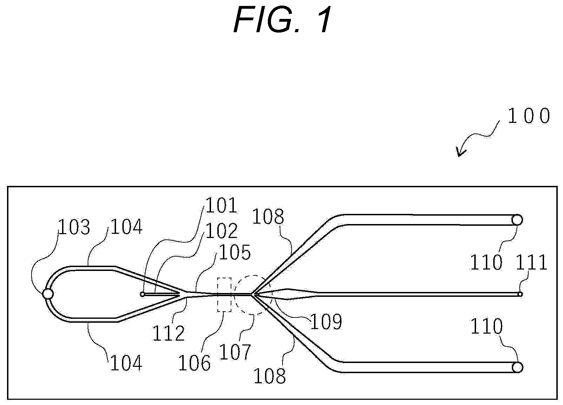

An example of a technology for sorting target microparticles in a microchip will be described below with reference to Fig. 1. Fig. 1 is a schematic diagram of an example of a microparticle sorting microchip.

As illustrated in Fig. 1, a microchip 100 is provided with a sample liquid inlet 101 and a sheath liquid inlet 103. From these inlets, a sample liquid and a sheath liquid are introduced into a sample liquid flow channel 102 and a sheath liquid flow channel 104, respectively. The microparticles are contained in the sample liquid.

The sample liquid and the sheath liquid merge at a merging portion 112 to form a laminar flow in which the sample liquid is surrounded by the sheath liquid. The laminar flow flows through a main flow channel 105 toward a particle sorting portion 107.

The main flow channel 105 is provided with a detection area 106. In the detection area 106, the microparticles in the sample liquid are irradiated with light. On the basis of fluorescence and/or scattered light generated by the irradiation of the light, it can be determined whether or not the microparticles are ones to be collected. One position in the detection area 106 may be irradiated with one light, or each of a plurality of positions in the detection area 106 may be irradiated with light. For example, the microchip 100 can be configured to cause each of two different positions in the detection area 106 is irradiated with light (that is, there are two positions to be irradiated with light, in the detection area 106). In this case, for example, it can be determined whether or not the microparticles are ones to be collected on the basis of light (for example, fluorescence and/or scattered light) generated by light irradiation to the microparticles at one position. Moreover, a speed of the microparticles in the flow channel can also be calculated on the basis of a difference between a detection time of light generated by the light irradiation at the one position and a detection time of light generated by light irradiation at another position. For the calculation, a distance between the two irradiation positions can be determined in advance, and the speed of the microparticles can be determined on the basis of the difference between the two detection times and the distance. Moreover, on the basis of the speed, an arrival time at the particle sorting portion 107 described below can be accurately predicted. The arrival time is accurately predicted, whereby it is possible to optimize a timing of formation of a flow entering a particle sorting flow channel 109. Furthermore, in a case where a difference between an arrival time to the particle sorting portion 107 of certain microparticles and an arrival time to the particle sorting portion 107 of microparticle before or after the certain microparticles is less than or equal to a predetermined threshold value, it is also possible to determine not to sort the certain microparticles. In a case where a distance between the certain microparticles and the microparticles before or after the certain microparticles is small, a possibility is increased that the microparticles before or after the certain microparticles are collected together with suction of the certain microparticles. By determining not to sort the certain microparticles in a case where the possibility that the microparticles are collected together is high, it is possible to prevent the microparticles before or after the certain microparticles from being collected. As a result, purity of the target microparticles among the collected microparticles can be increased. Specific examples of a microchip in which each of two different positions in the detection area 106 is irradiated with light and a device including the microchip are described in, for example, Japanese Patent Application Laid-Open No. 2014-202573.

In the particle sorting portion 107 in the microchip 100, the laminar flow flowing through the main flow channel 105 is separated into two branch flow channels 108 and flows. The particle sorting portion 107 illustrated in Fig. 1 includes the two branch flow channels 108, but the number of branch flow channels is not limited to two. The particle sorting portion 107 can be provided with, for example, one or a plurality of (for example, two, three, four, or the like) branch flow channels. The branch flow channel may be configured to branch in a Y shape on one plane as illustrated in Fig. 1, or may be configured to branch three-dimensionally.

Furthermore, in the particle sorting portion 107, only in a case where microparticles to be collected flow, a flow entering the particle sorting flow channel 109 is formed and the microparticles are collected. The formation of the flow entering the particle sorting flow channel 109 can be performed, for example, by generating a negative pressure in the particle sorting flow channel 109. To generate the negative pressure, for example, an actuator can be attached to the outside of the microchip 100 so that a wall of the particle sorting flow channel 109 can be deformed. Due to the deformation of the wall, the inner space of the particle sorting flow channel 109 is changed, and the negative pressure can be generated. The actuator can be, for example, a piezo actuator. When the microparticles are sucked into the particle sorting flow channel 109, the sample liquid forming the laminar flow or the sample liquid and the sheath liquid forming the laminar flow can also flow into the particle sorting flow channel 109. In this way, the microparticles are sorted in the particle sorting portion 107.

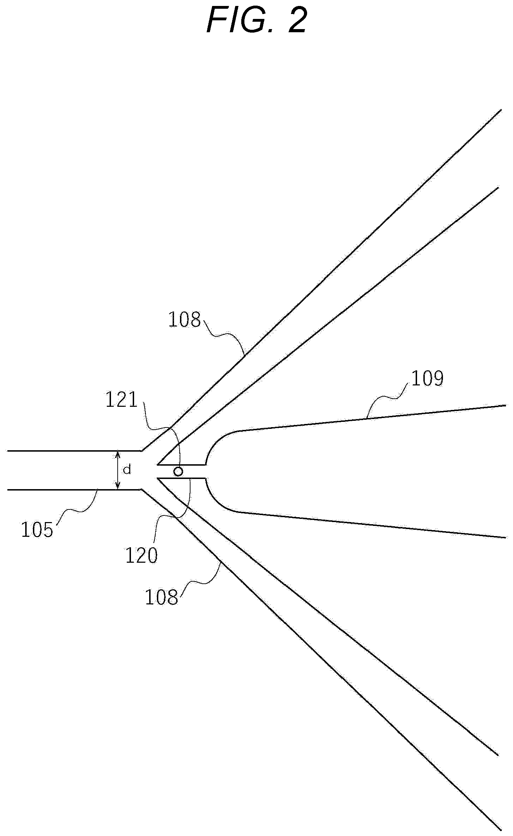

An enlarged view of the particle sorting portion 107 is illustrated in Fig. 2. As illustrated in Fig. 2, the main flow channel 105 and the particle sorting flow channel 109 are communicated with each other via an orifice portion 120 coaxial with the main flow channel 105. The microparticles to be collected flow through the orifice portion 120 to the particle sorting flow channel 109. Furthermore, the orifice portion 120 can be provided with a gate flow inlet 121 to prevent microparticles that are not to be collected from entering the particle sorting flow channel 109 through the orifice portion 120. The sheath liquid is introduced from the gate flow inlet 121, and a flow from the orifice portion 120 to the main flow channel 105 is formed by a part of the introduced sheath liquid, whereby the microparticles that are not to be collected are prevented from entering the particle sorting flow channel 109. Note that, the rest of the introduced sheath liquid flows to the particle sorting flow channel 109.

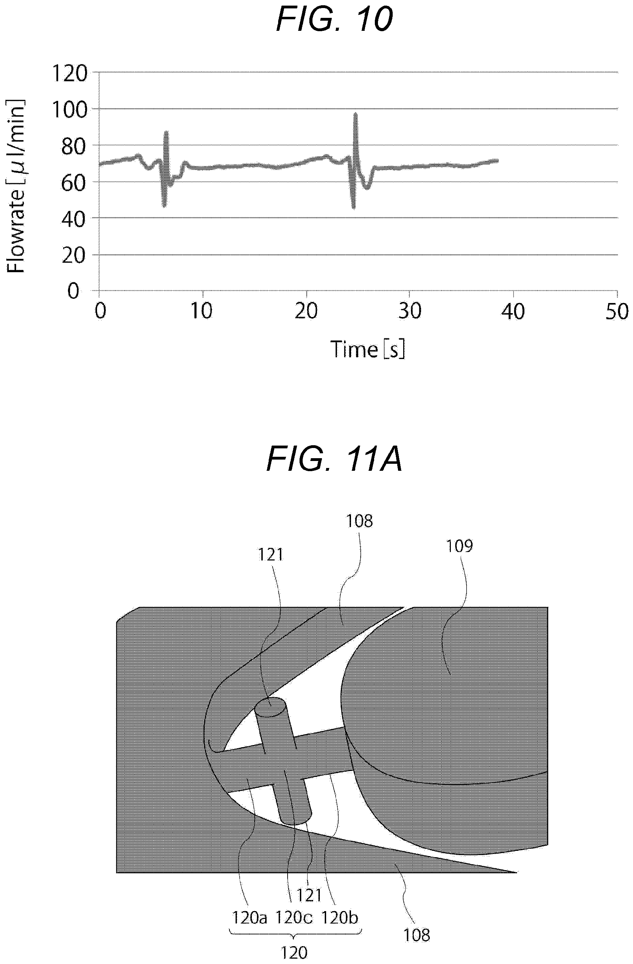

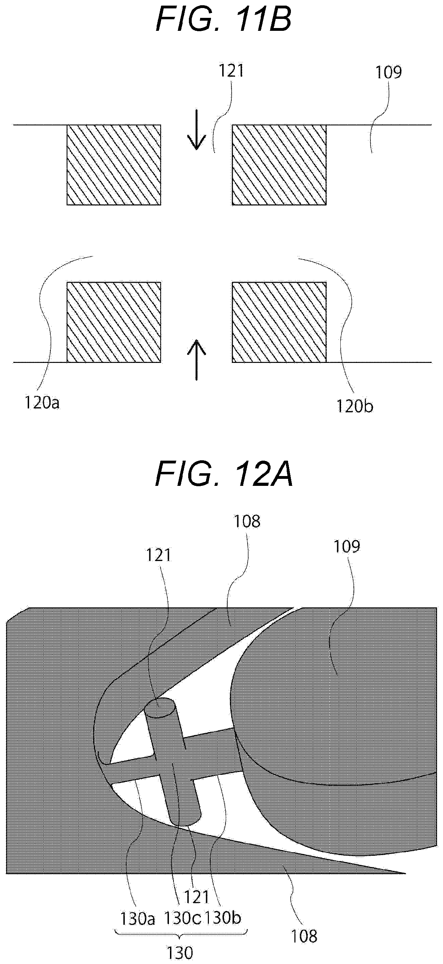

Enlarged views of the vicinity of the orifice portion 120 are illustrated in Figs. 11A and 11B. Fig. 11A is a schematic perspective view of the vicinity of the orifice portion 120. Fig. 11B is a sectional view of the orifice portion 120. The sectional view is a schematic sectional view in a plane passing through the center line of the gate flow inlet 121 and the center line of the orifice portion 120. The orifice portion 120 includes a flow channel 120a (hereinafter, also referred to as an upstream orifice portion flow channel 120a) on the detection area 106 side, a flow channel 120b (hereinafter, also referred to as a downstream orifice portion flow channel 120b) on the particle sorting flow channel 109 side, and a connection portion 120c between the orifice portion 120 and the gate flow inlet 121. The gate flow inlet 121 is provided to be substantially perpendicular to the axis of the flow channel of the orifice portion 120. In Figs. 11A and 11B, two gate flow inlets 121 are provided to face each other at substantially the center position of the orifice portion 120, but only one gate flow inlet may be provided.

The shape and dimensions of the cross section of the upstream orifice portion flow channel 120a may be the same as the shape and dimensions of the downstream orifice portion flow channel 120b. For example, as illustrated in Figs. 11A and 11B, both the cross section of the upstream orifice portion flow channel 120a and the cross section of the downstream orifice portion flow channel 120b may be substantially circular having the same dimensions. Alternatively, both of these two cross sections may be rectangles (for example, squares or oblongs) having the same dimensions.

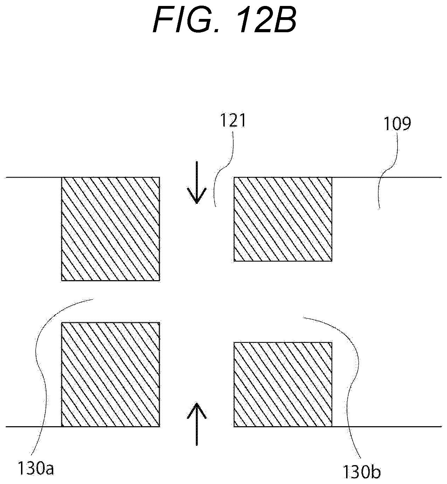

The shape and/or dimensions of the cross section of the upstream orifice portion flow channel 120a may be different from the shape and/or dimensions of the downstream orifice portion flow channel 120b. Examples are illustrated in Figs. 12A and 12B in which dimensions of these two flow channels are different from each other. As illustrated in Figs. 12A and 12B, a flow channel 130a (hereinafter, also referred to as an upstream orifice portion flow channel 130a) on the detection area 106 side, a flow channel 130b (hereinafter referred to as a downstream orifice portion flow channel 130b) on the particle sorting flow channel 109 side, and an orifice portion 130 include a connection portion 130c between the orifice portion 130 and the gate flow inlet 121. Both the cross section of the upstream orifice portion flow channel 130a and the cross section of the downstream orifice portion flow channel 130b have a substantially circular shape, but the diameter of the latter cross section is larger than the diameter of the former cross section. By making the diameter of the cross section of the latter larger than that of the former, it is possible to more effectively prevent the microparticles already sorted in the particle sorting flow channel 109 immediately after microparticle sorting operation due to the negative pressure described above from being discharged to the main flow channel 105 through the orifice portion 130, as compared with a case where both diameters are the same.

For example, in a case where the cross section of the upstream orifice portion flow channel 130a and the cross section of the downstream orifice portion flow channel 130b are both rectangular, it is possible to more effectively prevent the already collected microparticles from being discharged to the main flow channel 105 through the orifice portion 130 as described above, by making an area of the latter cross section larger than an area of the former cross section.

The laminar flow flowing to the branch flow channel 108 can be discharged to the outside of the microchip at a branch flow channel end 110. Furthermore, the microparticles collected into the particle sorting flow channel 109 can be discharged to the outside of the microchip at a particle sorting flow channel end 111. In this way, the target microparticles are sorted by the microchip 100.

To further sort microparticles having a certain characteristic from the microparticles sorted by a microparticle sorting microchip such as the microchip 100 described above, or to increase purity of the microparticles having the certain characteristic, it is conceivable to further connect another microparticle sorting microchip downstream of the microparticle sorting microchip (for example, downstream of the particle sorting flow channel end 111 of the microchip 100).

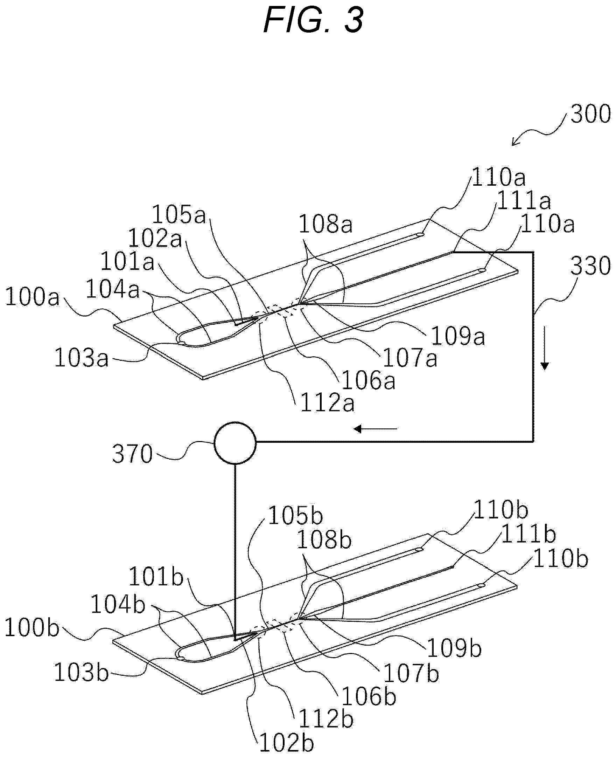

However, in a case where the two microparticle sorting microchips are connected together by, for example, a flow channel such as a tube, a flow rate in a flow channel forming the particle sorting portion in one microparticle sorting microchip can give an influence on a flow rate in a flow channel forming the particle sorting portion in the other microparticle sorting microchip. The influence makes it difficult to control the flow rates in these two particle sorting portions independently. This will be described below with reference to Fig. 3.

Fig. 3 illustrates an example of a microparticle sorting flow channel unit including two microparticle sorting microchips whose flow channels are connected together. A microparticle sorting flow channel unit 300 illustrated in Fig. 3 includes two microparticle sorting microchips 100a and 100b, and these microparticle sorting microchips 100a and 100b are connected together via, for example, a flow channel connecting member 330 such as a tube. Both the microparticle sorting microchips 100a and 100b are the same as the microparticle sorting microchip 100 described above with reference to Figs. 1 and 2. A particle sorting flow channel end 111a (that is a fluid discharge port from the microchip 100a) of the microchip 100a is connected to one end of the flow channel connecting member 330, and the other end of the flow channel connecting member 330 is connected to a sample liquid inlet 101b (that is a fluid supply port to the microchip 100b) of the microchip 100b. Moreover, a pump 370 is provided upstream of the sample liquid inlet 101b to introduce the sample liquid from the sample liquid inlet 101b into the microchip 100b at a predetermined flow rate.

In the microparticle sorting flow channel unit 300 illustrated in Fig. 3, in a case where a liquid flows from the upstream microparticle sorting microchip 100a to the downstream microparticle sorting microchip 100b without drive of the pump 370, a discharge flow rate from the particle sorting flow channel end 111a of the microchip 100a and an introduction flow rate to the sample liquid inlet 101b of the microchip 100b are the same. In this case, the discharge flow rate and the introduction flow rate cannot be controlled independently of each other. For that reason, a flow rate in a particle sorting flow channel 109a and a flow rate in a sample liquid flow channel 102b also cannot be controlled independently of each other.

Furthermore, in a case where the pump 370 is driven to control the flow rate in the sample liquid flow channel 102b, a flow rate fluctuation (for example, pulsating flow or the like) due to the pump 370 can give an influence on a flow rate in the microchip 100a, particularly the flow rate in the particle sorting flow channel 109a. The influence can also give an influence on microparticle sorting in a particle sorting portion 107a of the microchip 100a.

Similarly, a flow rate fluctuation in the microchip 100a also may give an influence on a flow rate in the microchip 100b, particularly the flow rate in the sample liquid flow channel 102b. The influence can give an influence also on microparticle sorting in a particle sorting portion 107b of the microchip 100b.

As described above, in a case where the two microparticle sorting microchips are connected together as illustrated in Fig. 3, it is difficult to independently control the flow rates in the two particle sorting portions included in these microchips.

The present inventors have found that the flow rates in the two particle sorting portions can be independently controlled by a microparticle sorting flow channel unit having a specific configuration. The configuration of the microparticle sorting flow channel unit will be specifically described below.

### 2. First embodiment (microparticle sorting flow channel unit)

### (1) Description of first embodiment

The present technology relates to a microparticle sorting flow channel unit including: a first particle sorting portion; a fluid storage container that is downstream of the first particle sorting portion and is enabled to store a fluid; and a second particle sorting portion that is downstream of the fluid storage container. The fluid storage container included in the flow channel unit is fluidly connected to at least one fluid discharge port that is downstream of the first particle sorting portion and at least one fluid supply port that is upstream of the second particle sorting portion, and the fluid storage container is configured as in claim 1. It is possible to independently control the flow rates in the first particle sorting portion and the second particle sorting portion by the fluid storage container.

The microparticle sorting flow channel unit of the present technology includes the first particle sorting portion and the second particle sorting portion. These particle sorting portions may be the same as each other, or different from each other. The second particle sorting portion is downstream of the first particle sorting portion. That is, a fluid (for example, a particle-containing fluid) passing through the first particle sorting portion is subjected to microparticle sorting in the second particle sorting portion. As a result, from microparticles sorted depending on presence or absence of a certain characteristic, microparticle having another characteristic can be further sorted. Furthermore, in a case where the microparticles sorted by one sorting process contain unintended microparticles, the purity of the target microparticles can be further increased.

According to one embodiment of the present technology, the first particle sorting portion and the second particle sorting portion may be respectively provided in the two microparticle sorting microchips. In this embodiment, the fluid (particularly a microparticle-containing fluid) passing through the first particle sorting portion provided in the upstream microparticle sorting microchip is subjected to the microparticle sorting in the second particle sorting portion provided in the downstream microparticle sorting microchip. In the present technology, the upstream microparticle sorting microchip is also referred to as a first microparticle sorting microchip, and the downstream microparticle sorting microchip is also referred to as a second microparticle sorting microchip. That is, in this embodiment, the microparticle sorting flow channel unit includes the first microparticle sorting microchip and the second microparticle sorting microchip, and the first particle sorting portion is provided in the first microparticle sorting microchip, and the second particle sorting portion is provided in the second microparticle sorting microchip. The microparticle sorting can be performed in each microchip.

In this embodiment, the at least one fluid discharge port is provided in the upstream microparticle sorting microchip, and the at least one fluid supply port is provided in the downstream microparticle sorting microchip. The at least one fluid discharge port and the fluid storage container may be fluidly connected together, and may be fluidly connected together by, for example, a flow channel connecting member such as a tube. The fluid (particularly the microparticle-containing fluid) passing through the first particle sorting portion can exit from the at least one fluid discharge port to the outside of the upstream microparticle sorting microchip, and then travel through the flow channel connecting member into the fluid storage container. Furthermore, the fluid storage container and the at least one fluid supply port may be fluidly connected together, and may be fluidly connected together by, for example, a flow channel connecting member such as a tube. The fluid (particularly the microparticle-containing fluid) exiting the fluid storage container enters the downstream microparticle sorting microchip from the at least one fluid supply port, and then travels to the second particle sorting portion.

According to another embodiment of the present technology, the first particle sorting portion and the second particle sorting portion may be provided in one microparticle sorting microchip. In this embodiment, both the at least one fluid discharge port and the at least one fluid supply port are provided in the one microparticle sorting microchip. For example, the at least one fluid discharge port and the fluid storage container may be fluidly connected together, and may be fluidly connected together by, for example, a flow channel connecting member such as a tube. The fluid (particularly the microparticle-containing fluid) passing through the first particle sorting portion can exit from the at least one fluid discharge port to the outside of the one microparticle sorting microchip, and then travel through the flow channel connecting member into the fluid storage container. Furthermore, the fluid storage container and the at least one fluid supply port may be fluidly connected together, and may be fluidly connected together by, for example, a flow channel connecting member such as a tube. The fluid (particularly the microparticle-containing fluid) exiting the fluid storage container returns from the at least one fluid supply port into the one microparticle sorting microchip, and then travels to the second particle sorting portion.

In the present technology, "fluid connection" can mean that two objects to be connected (for example, the fluid discharge port and the fluid storage container, and the fluid storage container and the fluid supply port) are connected together by the flow channel connecting member or the like such that the fluid does not leak.

In the present technology, "micro" means that at least a part of the flow channel included in each microparticle sorting microchip has a dimension of um order, particularly a cross-sectional dimension of um order. That is, in the present technology, the "microchip" refers to a chip including a flow channel of um order, particularly a chip including a flow channel having a cross-sectional dimension of um order. For example, a chip including a particle sorting portion including a flow channel having a cross-sectional dimension of um order can be called a microchip according to the present technology. In the present technology, the microchip may be one including, for example, the particle sorting portion 107 described in the above "1. Related technology". In the particle sorting portion 107, the cross section of the main flow channel 105 is, for example, rectangular, and a width d of the main flow channel 105 can be, for example, 100 um to 500 µm, and particularly 100 um to 300 um in the particle sorting portion 107. The width of the branch flow channel 108 may be smaller than the width of the main flow channel 105. The cross section of the orifice portion 120 is, for example, circular, and the diameter of the orifice portion 120 at a connection portion between the orifice portion 120 and the main flow channel 105 can be, for example, 10 um to 60 um, particularly 20 um to 50 um. These dimensions regarding the flow channels may be appropriately changed depending on the size of the microparticles.

Connection of the flow channels may be performed with, for example, a flow channel connecting member such as a tube. The material of the tube may be appropriately selected by those skilled in the art from those used in the technical field to which the present technology belongs. The tube may be, for example, a polyvinyl chloride (PVC) tube, a silicone tube, a polyetheretherketone (PEEK) tube, a polytetrafluoroethylene (PTFE) tube, or a thermoplastic elastomer tube, or a plurality of types of tubes may be connected together. The connection between the at least one fluid discharge port and the fluid storage container, and the connection between the fluid storage container and the at least one fluid supply port may also be performed with the flow channel connecting member.

The microparticle sorting flow channel unit of the present technology includes at least one fluid storage container, and the fluid storage container is provided between the two particle sorting portions. That is, the fluid storage container is provided on a flow channel connecting the two particle sorting portions together. More specifically, the fluid storage container is configured so that the fluid exiting from the at least one fluid discharge port can flow in, and can store the fluid. The fluid storage container may be configured so that the fluid stored therein can be discharged to the outside of the container, and configured so that the fluid discharged from the container flows to the at least one fluid supply port.

The fluid storage container is configured so that the fluid storage capacity in the container changes depending on the difference between the flow rates before and after the container. More specifically, the fluid storage container can suppress an influence on a flow rate in a flow channel downstream of the fluid storage container due to a flow rate fluctuation in a flow channel upstream of the fluid storage container, or suppress an influence on a flow rate in the flow channel upstream of the fluid storage container due to a flow rate fluctuation in the flow channel downstream of the fluid storage container. As a result, for example, the fluid storage container can suppress that the flow rate fluctuation in one of the first particle sorting portion or the second particle sorting portion gives an influence on the other particle sorting portion. The fluid storage container may be used to bring about such a suppression effect.

In the present technology, the flow rate fluctuation can mean that a flow direction is constant but an amount of flow changes. The flow rate fluctuation may be a fluctuation that occurs irregularly or regularly. In the present technology, the flow rate fluctuation may be a flow rate fluctuation caused by microparticle sorting operation, and more particularly, a pulsating flow caused by drive of a pump or a pulsating flow caused by a microparticle sorting process. That is, the fluid storage container can be used to reduce an influence due to the pulsating flow of the fluid flowing through any one particle sorting portion of the first particle sorting portion or the second particle sorting portion on a flow rate in the other particle sorting portion.

Furthermore, it is also possible to control the flow rates upstream and downstream of the container independently of each other by the fluid storage container. That is, the fluid storage container can be used to independently control the flow rate of the fluid flowing through the first particle sorting portion and the flow rate of the fluid flowing through the second particle sorting portion. For example, the fluid storage container can make it possible to control the flow rate of the fluid exiting from the at least one fluid discharge port to be greater than or to be less than the flow rate of the fluid entering the at least one fluid supply port.

From a viewpoint of ease of manufacture, the number of the fluid storage containers provided between the two particle sorting portions is preferably one to five, more preferably one to three, and even more preferably one or two, and particularly preferably one.

According to one example not forming part of the present technology, the fluid storage container may be configured so that a liquid air interface is formed in the container. The fluid storage container in which the liquid air interface is formed is suitable for suppressing the influence of the flow rate fluctuation caused by the microparticle sorting operation in the two particle sorting portions. For example, the pulsating flow can be dispersed or absorbed by the fluid storage container in which the liquid air interface is formed. That is, the fluid storage container can function as a component for dispersing or absorbing the pulsating flow.

According to the claimed invention, the fluid storage container is configured to inflate with a change (increase) in the fluid storage capacity. The fluid storage container is be configured to inflate due to a structure of the fluid storage container, or configured to inflate due to a material characteristic (particularly elastic characteristic) of the fluid storage container.

According to one embodiment of the present technology, the fluid storage container itself may include a material having no elastic characteristic. In this embodiment, the fluid storage container may be configured to be inflatable due to the structure of the container. In this embodiment, the fluid storage container may be configured, for example, to be in the form of a sheet in a case where the fluid is not stored, and to increase an internal volume of the fluid storage container as the fluid is stored (like a plastic bag, an infusion bag, or the like, for example).

According to another embodiment of the present technology, the fluid storage container may include a material (for example, a rubber material or the like) having an elastic characteristic. In this embodiment, the fluid storage container itself stretches (for example, inflates like a balloon), thereby being able to store more fluid inside.

The fluid storage container may be filled in advance with a gas (for example, air or inert gas such as nitrogen gas and argon gas). The gas can be compressed as the fluid is stored in the fluid storage container.

The fluid storage container may be provided with a filter inside. The filter can be, for example, to prevent contamination derived from the outside air. The filter may be one capable of communicating the pressure (for example, air pressure) of the gas inside the fluid storage container with the outside air, for example. The filter may include a material that does not allow liquids to permeate.

The fluid storage container may be configured so that the fluid flowing into the container, particularly the liquid, does not leak from the container. For example, the material forming the fluid container container can be one that enables the change in the fluid storage capacity as described above and retention of the fluid. The material may be appropriately selected by those skilled in the art. The container can be, for example, a plastic bag. The plastic bag can be, for example, a bag including polyethylene, polypropylene, polyvinyl chloride, or an ethylene vinyl acetate copolymer.

The fluid storage container may be configured to be able to store a fluid of an amount (volume) greater than or equal to a value obtained by multiplying an absolute value of a difference between flow rates before and after the fluid storage container by a time for which the fluid flows into the microparticle sorting flow channel unit. As a result, it is possible to prevent the fluid storage container from being damaged or burst while the microparticle sorting process is performed by the microparticle sorting flow channel unit of the present technology. The difference between the flow rates before and after the fluid storage container may be, more particularly, a difference between a flow rate in a flow channel fluidly connecting the at least one fluid discharge port and the fluid storage container together, and a flow rate in a flow channel fluidly connecting the fluid storage container and the at least one fluid supply port together. The fluid storage container for storing the fluid of the amount may be appropriately selected by those skilled in the art in consideration of the difference and the time.

The fluid storage container can be provided at any position on a flow channel connecting the first particle sorting portion and the second particle sorting portion together. The position where the fluid storage container is provided can be, for example, either (a) or (b) below.

(a) According to one embodiment of the present technology, the microparticle sorting flow channel unit according to the present technology may include an upstream microparticle sorting microchip and a downstream microparticle sorting microchip, the upstream microparticle sorting microchip may be provided with the first particle sorting portion and the at least one fluid discharge port, the downstream microparticle sorting microchip may be provided with the second particle sorting portion and the at least one fluid supply port, and the fluid storage container may be provided on a flow channel fluidly connecting the at least one fluid discharge port and the at least one fluid supply port together. More specifically, the fluid storage container may be provided at any position on a flow channel connecting a fluid discharge port in which microparticles sorted at the first particle sorting portion are discharged from the upstream microparticle sorting microchip to a fluid supply port for supplying the fluid into the downstream microparticle sorting microchip.
   This embodiment will be described in more detail below in "(2) First example of first embodiment (microparticle sorting flow channel unit)".
(b) According to another embodiment of the present technology, the microparticle sorting flow channel unit according to the present technology may include an upstream microparticle sorting microchip provided with the first particle sorting portion and a downstream microparticle sorting microchip provided with the second particle sorting portion, and the fluid storage container may be provided in any one microchip of the two microparticle sorting microchips.

For example, the fluid storage container may be provided on a flow channel between the first particle sorting portion and a fluid discharge port in which microparticles sorted at the particle sorting portion are discharged from the upstream microparticle sorting microchip. In this embodiment, another fluid discharge port and a fluid supply port may be further provided between the first particle sorting portion and the fluid discharge port, and the other fluid discharge port and the fluid supply port may be fluidly connected to the fluid storage container.

This embodiment will be described in more detail below in "(3) Second example of first embodiment (microparticle sorting flow channel unit)".

Alternatively, the fluid storage container may be provided on a flow channel between a fluid supply port of the downstream microparticle sorting microchip and the second particle sorting portion in the downstream microparticle sorting microchip. For example, in a case where a flow toward the particle sorting portion in the downstream microparticle sorting microchip is a laminar flow including a sample liquid and a sheath liquid described below, the fluid storage container may be provided on a flow channel between the fluid supply port of the downstream microparticle sorting microchip and a merging portion where the sample liquid and the sheath liquid merge.

According to still another embodiment of the present technology, the fluid storage container may be provided at any position on a flow channel connecting a fluid discharge port (for example, a waste liquid discharge port) other than a fluid discharge port in which microparticles sorted at the first particle sorting portion in the upstream microparticle sorting microchip are discharged from the microchip to the fluid supply port for supplying the fluid into the downstream microparticle sorting microchip. As a result, for example, in a case where a sorting process is performed on microparticles discharged from the waste liquid discharge port of the upstream microparticle sorting microchip in the second particle sorting portion, it is possible to independently control flow rates in both microchips.

The fluid storage container can include, for example, an inflow port for a fluid flowing upstream to enter the container and an outflow port for the fluid in the container to flow downstream. For example, the fluid discharge port and the inflow port can be fluidly connected together by a flow channel connecting member such as a tube, and the outflow port and the fluid supply port can be fluidly connected together by a flow channel connecting member such as a tube.

A connector known in this technical field may be used to connect the inflow port to a tube. A connector known in this technical field may be used also to connect the outflow port to a tube. The type of the connector may be appropriately selected by those skilled in the art depending on the size of the tube and the size of the inflow port.

The microparticle sorting microchip constituting the microparticle sorting flow channel unit of the present technology includes at least one particle sorting portion, includes one or two particle sorting portions, for example, and particularly includes one particle sorting portion. The particle sorting portion can include, for example, a flow channel that supplies a fluid containing microparticles to the particle sorting portion, a flow channel through which a fluid containing microparticles sorted in the particle sorting portion flows, and a flow channel through which a fluid containing microparticles that are not sorted in the particle sorting portion flows.

The microparticle sorting microchip may preferably be for performing on-chip sorting. That is, the particle sorting portion is provided in the microparticle sorting microchip. All of the flow channel that supplies the fluid containing microparticles to the particle sorting portion, the flow channel through which the fluid containing microparticles sorted in the particle sorting portion flows, and the flow channel in which the fluid containing microparticles that are not sorted in the particle sorting portion flows are provided in the microparticle sorting microchip.

According to a preferred embodiment, a fluid flowing through the flow channel that supplies the fluid containing the microparticles to the particle sorting portion can be a laminar flow including a sample liquid containing the microparticles and a sheath liquid surrounding the sample liquid. The laminar flow allows microparticles to flow side by side in a row, which is suitable for microparticle sorting. For example, the microparticles flow side by side in a row, whereby it becomes easier to irradiate each of the microparticles with light, and it is possible to determine whether or not the microparticles are to be sorted on the basis of scattered light and/or fluorescence generated by the irradiation of the light.

According to one embodiment of the present technology, one particle sorting portion of the microparticle sorting microchip includes a main flow channel through which a fluid (particularly a liquid) containing microparticles flows, a branch flow channel that branches from the main flow channel, and a particle sorting flow channel coaxial with the main flow channel. Examples of the microparticle sorting microchip including the particle sorting portion include the microparticle sorting microchip described in the above "1. Related technology". That is, according to one embodiment of the present technology, the microparticle sorting microchip may be the microparticle sorting microchip described in the above "1. Related technology", and is for performing on-chip sorting. The particle sorting portion of the microparticle sorting microchip described in the above "1. Related technology" includes the main flow channel through which the fluid containing microparticles flows, the branch flow channel that branches from the main flow channel, and the particle sorting flow channel coaxial with the main flow channel. The main flow channel and the particle sorting flow channel can be communicated with each other via an orifice portion that is coaxial with the main flow channel. The microparticles to be collected flow through the orifice portion to the particle sorting flow channel. Other microparticles flow to the branch flow channel. A more detailed description of the particle sorting portion and configurations other than the particle sorting portion are as described in the above "1. Related Technology", and the description also applies to the microparticle sorting microchip used in the present technology.

The particle sorting microchip used in the present technology may be a microparticle sorting microchip other than the microparticle sorting microchip described in the above "1. Related technology".

In a case where the microparticle sorting flow channel unit of the present technology includes two or more microparticle sorting microchips (for example, two microparticle sorting microchips of an upstream microparticle sorting microchip and a downstream microparticle sorting microchip), configurations of the microparticle sorting microchips may be the same as each other or different from each other.

According to one embodiment of the present technology, the fluid discharge port of the upstream microparticle sorting microchip is connected to the fluid supply port of the downstream microparticle sorting microchip.

The fluid discharge port of the upstream microparticle sorting microchip can preferably be a fluid discharge port in which microparticles sorted at the particle sorting portion of the upstream microparticle sorting microchip are discharged from the microchip.

The fluid supply port of the downstream microparticle sorting microchip can preferably be a fluid supply port that supplies a fluid containing microparticles to the particle sorting portion of the downstream microparticle sorting microchip.

The fluid discharge port of the upstream microparticle sorting microchip is connected to the fluid supply port of the downstream microparticle sorting microchip in this way, whereby the fluid containing the microparticles sorted by the upstream microparticle sorting microchip can be further subjected to a particle sorting process in the downstream microparticle separation microchip.

According to one embodiment of the present technology, a pump may be provided between the fluid discharge port and the fluid supply port. A flow rate of a fluid introduced into the at least one fluid supply port that is upstream of the second particle sorting portion can be controlled by the pump. The pump is preferably used for fluid supply into the downstream microparticle sorting microchip.

The pump may be provided, particularly, on a flow channel connecting the fluid discharge port and the fluid supply port together. The pump can be, but is not limited to, for example, a peristaltic pump (tube pump), a roller pump, a syringe pump, or a centrifugal pump. The pump can preferably be a peristaltic pump or a roller pump for more precise control of the flow rate.

According to one preferred embodiment of the present technology, a pump may be provided between the fluid discharge port and the fluid supply port. More particularly, a pump may be provided between the fluid discharge port of the upstream microparticle sorting microchip and the fluid supply port of the downstream microparticle sorting microchip. In this embodiment, the fluid storage container may be provided upstream of the pump.

The fluid storage container is provided upstream of the pump, whereby it is possible to reduce or remove an influence on the flow rate in the upstream microparticle sorting microchip given by a flow rate fluctuation (for example, pulsating flow) that occurs when the fluid is introduced into the downstream microparticle sorting microchip by the pump.

According to one embodiment of the present technology, the fluid storage container may be used as a container that collects microparticles sorted in the upstream microparticle sorting microchip. That is, in this embodiment, the container is used for independently control flow rates in the two microparticle sorting microchips and for collecting the microparticles sorted in the upstream microparticle sorting microchip. By using the fluid storage container as a particle collection container, it is not necessary to separately provide the particle collection container in the microparticle sorting flow channel unit, and the configuration of the flow channel unit can be simplified.

According to another embodiment of the present technology, a microparticle collection container that collects the microparticles sorted in the upstream microparticle sorting microchip may be provided downstream of the fluid storage container. A volume of a fluid storage space in the microparticle collection container may be constant.

In the present technology, microparticles may be appropriately selected by those skilled in the art. In the present technology, the microparticles can include biological microparticles such as cells, microorganisms, and liposomes, and synthetic microparticles such as latex particles, gel particles, and industrial particles, for example. The biological microparticles can include chromosomes, liposomes, mitochondria, organelles (cell organelles), and the like that constitute various cells. The cells can include animal cells (such as hematopoietic cells) and plant cells. The microorganisms can include bacteria such as Escherichia coli, viruses such as tobacco mosaic virus, fungi such as yeast, and the like. Moreover, the biological microparticles can also include biological polymers polymers such as nucleic acids, proteins, and complexes thereof. Furthermore, the synthetic microparticles can be microparticles including, for example, an organic or inorganic polymer material or a metal. The organic polymer material can include polystyrene, styrene-divinylbenzene, polymethylmethacrylate, and the like. The inorganic polymer material can include glass, silica, magnetic material, and the like. The metal can include gold colloid, aluminum, and the like. The shape of the microparticles may be spherical, substantially spherical, or non-spherical. The size and mass of the microparticles can be appropriately selected by those skilled in the art depending on the size of the flow channel of the microchip. On the other hand, the size of the flow channel of the microchip can also be appropriately selected depending on the size and mass of the microparticles. In the present technology, chemical or biological labels, for example, fluorescent dyes and the like, can be attached to the microparticles, as necessary. The labels can facilitate detection of the microparticles. The labels to be attached can be appropriately selected by those skilled in the art.

The fluid flowing through the microparticle sorting flow channel unit of the present technology is, for example, a liquid, a liquid substance, or a gas, and is preferably a liquid. The type of the fluid may be appropriately selected by those skilled in the art depending on, for example, the type of microparticles to be sorted. For example, as the fluid, a sample liquid and a sheath liquid commercially available, or a sample liquid and a sheath liquid known in the present technical field may be used.

The microparticle sorting microchip constituting the microparticle sorting flow channel unit of the present technology can be manufactured by a method known in this technical field. For example, the microparticle sorting microchip can be manufactured, for example, by laminating two or more substrates on which a predetermined flow channel is formed. The flow channel may be formed on, for example, all of two or more substrates (particularly two substrates), or may be formed only on a part of two or more substrates (particularly one of two substrates). The flow channel is preferably formed on only one substrate to make it easier to adjust a position when the substrates are bonded together.

As a material for forming the microparticle sorting microchip, a material known in this technical field can be used. Examples include, but are not limited to, polycarbonate, cycloolefin polymer, polypropylene, polydimethylsiloxane (PDMS), polymethyl methacrylate (PMMA), polyethylene, polystyrene, glass, and silicone. In particular, polymer materials are particularly preferable, such as polycarbonate, cycloolefin polymer, and polypropylene, because they are excellent in processability, and the microchip can be inexpensively manufactured by using a molding apparatus.

### (2) First example of first embodiment (microparticle sorting flow channel unit)

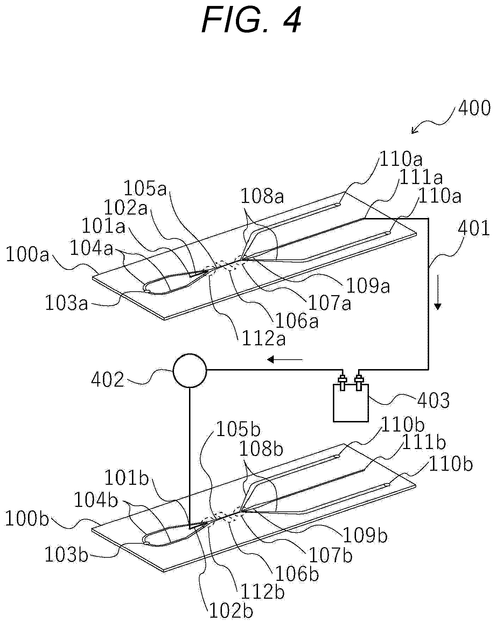

According to one embodiment of the present technology, the microparticle sorting flow channel unit according to the present technology may include an upstream microparticle sorting microchip and a downstream microparticle sorting microchip, the upstream microparticle sorting microchip may be provided with the first particle sorting portion and the at least one fluid discharge port, the downstream microparticle sorting microchip may be provided with the second particle sorting portion and the at least one fluid supply port, and the fluid storage container may be provided on a flow channel fluidly connecting the at least one fluid discharge port and the at least one fluid supply port together. An example of the microparticle sorting flow channel unit according to this embodiment will be described below with reference to Fig. 4. Fig. 4 is a schematic diagram of the microparticle sorting flow channel unit according to the present technology.

A microparticle sorting flow channel unit 400 illustrated in Fig. 4 is a flow channel unit in which one fluid storage container is added to the microparticle sorting flow channel unit illustrated in Fig. 3. As illustrated in Fig. 4, the microparticle sorting flow channel unit 400 includes the two microparticle sorting microchips 100a and 100b, and these microparticle sorting microchips are connected together via, for example, a flow channel connecting member 401 such as a tube. The particle sorting flow channel end 111a (that is a fluid discharge port) of the microparticle sorting microchip 100a is connected to one end of the flow channel connecting member 401, and the other end of the flow channel connecting member 401 is connected to the sample liquid inlet 101b (that is a fluid supply port) of the microparticle sorting microchip 100b. Moreover, a pump 402 is provided upstream of the sample liquid inlet 101b to introduce the sample liquid from the sample liquid inlet 101b into the microparticle sorting microchip 100b at a predetermined flow rate. The microparticle sorting microchip 100a is an upstream microparticle sorting microchip, and the microparticle sorting microchip 100b is a downstream microparticle sorting microchip.

Moreover, one fluid storage container 403 is provided downstream of the particle sorting flow channel end 111a of the microparticle sorting microchip 100a and upstream of the pump 402. The fluid storage container 403 can include an inflow port through which a liquid exiting the microparticle sorting microchip 100a from the particle sorting flow channel end 111a can flow in, and an outflow port through which a fluid in the fluid storage container 403 can flow out.

Configurations of the microparticle sorting microchips 100a and 100b are the same as the configuration of the microparticle sorting microchip 100 illustrated in Fig. 1. A component indicated by a certain reference numeral illustrated in Fig. 1 is the same as a component in Fig. 4 indicated by a reference numeral to which a or b is added to the reference numeral. For example, a main flow channel 105a and a main flow channel 105b in Fig. 4 are the same as the main flow channel 105 in Fig. 1. For that reason, the description of each component of the microparticle sorting microchips 100a and 100b will be omitted.

An example of microparticle sorting operation using the microparticle sorting flow channel unit 400 will be described below.

From a sample liquid inlet 101a and a sheath liquid inlet 103a, a sample liquid containing microparticles and a sheath liquid are introduced into a sample liquid flow channel 102a and a sheath liquid flow channel 104a, respectively (hereinafter, the sample liquid and the sheath liquid introduced into the microparticle sorting microchip 100a are referred to as a sample liquid a and a sheath liquid a, respectively). Introduction of the sample liquid a and the sheath liquid a can be performed by a pump on a tube connected to each of the sample liquid inlet 101a and the sheath liquid inlet 103a. The sample liquid a and the sheath liquid a merge at a merging portion 112a, and a laminar flow is formed in which the sample liquid a is surrounded by the sheath liquid a (hereinafter, the laminar flow in the microparticle sorting microchip 100a is referred to as a laminar flow a). The laminar flow a flows through the main flow channel 105a toward the particle sorting portion 107a.

In a detection area 106a provided in the main flow channel 105a, the microparticles in the sample liquid are irradiated with light. On the basis of fluorescence and/or scattered light generated by the irradiation of the light, it is determined whether or not the microparticles are ones to be collected. The determination can be made by whether the fluorescence and/or scattered light generated by the irradiation satisfies a first criterion. The first criterion may be preset by a user. The microparticles pass through the detection area 106a and flow toward the particle sorting portion 107a.

In the particle sorting portion 107a, the laminar flow a separates and flows to two branch flow channels 108a. Furthermore, in the particle sorting portion 107a, only in a case where the microparticles determined to be ones to be collected flow, a flow entering the microparticle sorting flow channel 109a is formed, and the microparticles are collected. A liquid containing the collected microparticles is used as a sample liquid in microparticle sorting by the microparticle sorting microchip 100b (hereinafter, the sample liquid and the sheath liquid introduced into the microparticle sorting microchip 100b are referred to as a sample liquid b and a sheath liquid b, respectively).

The sample liquid b flows through the particle sorting flow channel 109a toward the particle sorting flow channel end 111a. The sample liquid b exits the microparticle sorting microchip 100a at the particle sorting flow channel end 111a, and then flows through the flow channel connecting member 401 connected at the particle sorting flow channel end 111a toward the fluid storage container 403.

The pump 402 is provided upstream of the sample liquid inlet 101b and downstream of the fluid storage container 403. The sample liquid b is introduced into the sample liquid inlet 101b of the microparticle sorting microchip 100b, by the pump 402. The sample liquid b merges with the sheath liquid b introduced from a sheath liquid inlet 103b at a merging portion 112b, and forms a laminar flow (hereinafter, hereinafter, the laminar flow in the microparticle sorting microchip 100b is referred to as a laminar flow b). The laminar flow b flows through the main flow channel 105b toward the particle sorting portion 107b.

In a detection area 106b provided in the main flow channel 105b, the microparticles in the sample liquid are irradiated with light. On the basis of fluorescence and/or scattered light generated by the irradiation of the light, it is determined whether or not the microparticles are ones to be collected. The determination can be made by whether the fluorescence and/or scattered light generated by the irradiation satisfies a second criterion. The second criterion may be preset by the user. The second criterion may be different from or the same as the first criterion. The microparticles pass through the detection area 106b and flow toward the particle sorting portion 107b.

In the particle sorting portion 107b, the laminar flow b separates and flows to two branch flow channels 108b. Furthermore, in the particle sorting portion 107b, only in a case where the microparticles determined to be ones to be collected flow, a flow entering the particle sorting flow channel 109b is formed, and the microparticles are collected.

In the above microparticle sorting operation, there is a case where a flow rate flowing through the particle sorting flow channel 109a does not match a flow rate of the sample liquid b introduced into the sample liquid inlet 101b by the pump 402. For example, the former may be greater than the latter, or the former may be less than the latter. In a case where these two flow rates do not match, a fluid storage capacity in the fluid storage container 403 changes depending on a difference between these two flow rates. The fluid storage container 403 is configured so that the fluid storage capacity can be changed, whereby microparticle sorting processes in the respective microparticle sorting microchips 100a and 100b can be performed under flow rate conditions independent of each other even under a condition that these two flow rates do not match.

In a case where the flow rate flowing through the particle sorting flow channel 109a is greater than the flow rate of the sample liquid b introduced into the sample liquid inlet 101b, the sample liquid b of an amount corresponding to a difference between these two flow rates flows into the fluid storage container 403, and the fluid storage capacity in the fluid storage container 403 increases with the inflow. Due to an increase in the fluid storage capacity, the fluid storage container 403 is inflated, or the gas filled in advance in the fluid storage container 403 may be compressed. Due to the increase in the fluid storage capacity, the flow rate of the sample liquid b introduced into the sample liquid inlet 101b of the microparticle sorting microchip b does not receive an influence by the flow rate flowing through the particle sorting flow channel 109a, and is a flow rate as controlled by the pump 402.

Furthermore, when the sample liquid b is introduced into the microparticle sorting microchip b by the pump 402, the pump 402 can generate a pulsating flow. For example, a peristaltic pump can generate a pulsating flow. The fluid storage container 403 is provided upstream of the pump 402, whereby it is suppressed that the pulsating flow generated by drive of the pump 402 gives an influence on a flow rate in the flow channel connecting member (tube) 401 upstream of the fluid storage container 403, and moreover, it is also suppressed to give an influence on a flow rate in the microparticle sorting microchip a.

In a case where the flow rate flowing through the particle sorting flow channel 109a is less than the flow rate of the sample liquid b introduced into the sample liquid inlet 101b, a liquid of an amount corresponding to the difference between these two flow rates flows out from the fluid storage container 403. In this case, for example, a predetermined amount of liquid may be contained in the fluid storage container 403 prior to the start of the microparticle sorting process by the microparticle sorting flow channel unit 400. The liquid flows from the fluid storage container 403 to the flow channel connecting member (tube) 401 depending on the difference between the two flow rates described above. As a result, the flow rate flowing through the particle sorting flow channel 109a does not receive an influence by the flow rate of the sample liquid b introduced into the sample liquid inlet 101b of the microparticle sorting microchip b.

Furthermore, as described above, the fluid storage container 403 is provided upstream of the pump 402, whereby it is suppressed that the pulsating flow generated by the pump 402 gives an influence on a flow rate in the flow channel connecting member (tube) 401 upstream of the fluid storage container 403, and it is also suppressed to give an influence on a flow rate in the microparticle sorting microchip a.

As described above, it is possible to independently control the flow rates in the microparticle sorting microchips 100a and 100b by the fluid storage container 403.

The fluid storage container 403 may be used as a container that collects the microparticles sorted in the microparticle sorting microchip 100a. For example, in the case where the flow rate flowing through the particle sorting flow channel 109a is greater than the flow rate of the sample liquid b introduced into the sample liquid inlet 101b, the sample liquid b of an amount corresponding to the difference between these two flow rates flows into the fluid storage container 403. For that reason, the microparticles sorted in the microparticle sorting microchip 100a are collected in the fluid storage container 403. Note that, a part of the microparticles collected in the fluid storage container 403 can be subjected to the microparticle sorting operation by the microparticle sorting microchip 100b by the pump 402. As a result, for example, the microparticles collected in the fluid storage container 403 can be compared with the microparticles collected in the particle sorting flow channel 109b of the microparticle sorting microchip 100b. For example, in a case where the first criterion and the second criterion are different from each other, it is possible to know what ratio of the microparticles satisfying the second criterion exist in the microparticles satisfying the first criterion.

### (3) Second example of first embodiment (microparticle sorting flow channel unit)

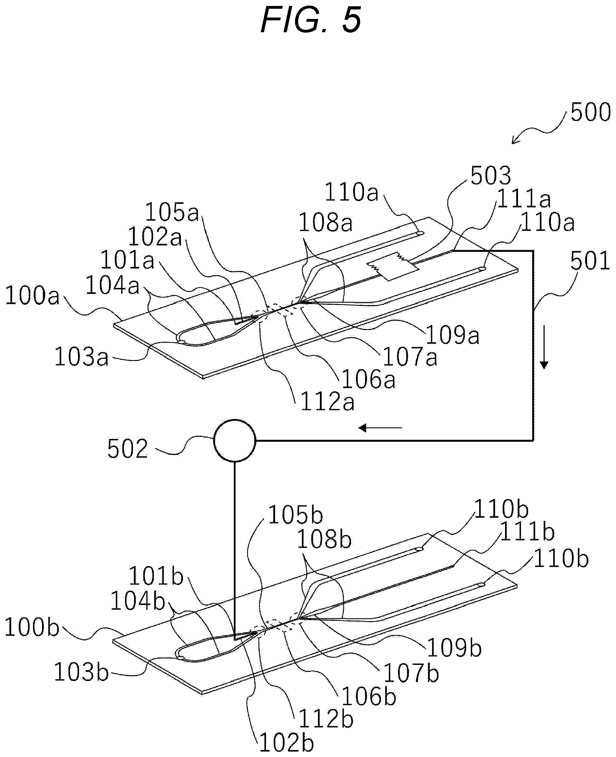

According to one embodiment of the present technology, the microparticle sorting flow channel unit according to the present technology includes an upstream microparticle sorting microchip provided with the first particle sorting portion and a downstream microparticle sorting microchip provided with the second particle sorting portion, and the fluid storage container may be provided on a flow channel between the first particle sorting portion and a fluid discharge port in which microparticles sorted at the particle sorting portion are discharged from the upstream microparticle sorting microchip. In this embodiment, another fluid discharge port and a fluid supply port may be further provided between the first particle sorting portion and the fluid discharge port, and the other fluid discharge port and the fluid supply port may be fluidly connected to the fluid storage container. An example of the microparticle sorting flow channel unit according to this embodiment will be described below with reference to Fig. 5. Fig. 5 is a schematic diagram of the microparticle sorting flow channel unit according to the present technology.

A microparticle sorting flow channel unit 500 illustrated in Fig. 5 is a flow channel unit in which one fluid storage container is added to the microparticle sorting flow channel unit illustrated in Fig. 3. As illustrated in Fig. 5, the microparticle sorting flow channel unit 500 includes the two microparticle sorting microchips 100a and 100b, and these microparticle sorting microchips are connected together via, for example, a flow channel connecting member 501 such as a tube. The particle sorting flow channel end 111a (that is a fluid discharge port) of the microparticle sorting microchip 100a is connected to one end of the flow channel connecting member 501, and the other end of the flow channel connecting member 501 is connected to the sample liquid inlet 101b (that is a fluid supply port) of the microparticle sorting microchip 100b. Moreover, a pump 502 is provided upstream of the sample liquid inlet 101b to introduce the sample liquid from the sample liquid inlet 101b into the microparticle sorting microchip 100b at a predetermined flow rate. The microparticle sorting microchip 100a is an upstream microparticle sorting microchip, and the microparticle sorting microchip 100b is a downstream microparticle sorting microchip.

Moreover, one fluid storage container 503 is provided on the particle sorting flow channel 109a of the microparticle sorting microchip 100a. That is, there is yet another fluid discharge port and another fluid supply port (not illustrated) are provided between the particle sorting portion of the microparticle sorting microchip 100a and a fluid discharge port in which microparticles sorted at the particle sorting portion are discharged from the microchip. The fluid storage container 503 is configured so that a liquid can flow into the fluid storage container 503 through the other fluid discharge port, and is configured so that the liquid in the fluid storage container 503 returns to the particle sorting flow channel 109a through the other fluid supply port.

The configuration of the microparticle sorting microchip 100a is the same as that of the microparticle sorting microchip 100 illustrated in Fig. 1, except that a fluid storage container 503 is added and the other fluid discharge port and the other fluid supply port are provided.

The configuration of the microparticle sorting microchip 100b is the same as that of the microparticle sorting microchip 100 illustrated in Fig. 1.

Each component of the microparticle sorting microchips 100a and 100b corresponds to each component in Fig. 1. That is, a component indicated by a certain reference numeral illustrated in Fig. 1 is the same as a component in Fig. 5 indicated by a reference numeral to which a or b is added to the reference numeral. For that reason, the description of each component of the microparticle sorting microchips 100a and 100b will be omitted.

An example of the microparticle sorting operation using the microparticle sorting flow channel unit 500 will be described below.

Microparticle sorting in the microparticle sorting microchip 100a is performed as described in the above "(2) First example of first embodiment (microparticle sorting flow channel unit)", and the microparticles determined to be ones to be collected are collected in the particle sorting flow channel 109a. A liquid containing the microparticles flows through the particle sorting flow channel 109a. The liquid is used as a sample liquid in the microparticle sorting by the microparticle sorting microchip 100b (hereinafter, the liquid flowing through the particle sorting flow channel 109a toward the particle sorting flow channel end 111a is referred to as the sample liquid b).

The sample liquid b exits the microparticle sorting macro-chip a from the particle sorting flow channel end 111a, and further flows through the flow channel connecting member 501 toward the sample liquid inlet 101b of the microparticle sorting microchip b.

The pump 502 is provided upstream of the sample liquid inlet 101b and downstream of the particle sorting flow channel end 111a. The sample liquid b is introduced into the sample liquid inlet 101b of the microparticle sorting microchip 100b, by the pump 502. The sample liquid b merges with the sheath liquid b introduced from a sheath liquid inlet 103b at the merging portion 112b, and forms a laminar flow (hereinafter, hereinafter, the laminar flow in the microparticle sorting microchip 100b is referred to as a laminar flow b). The laminar flow b flows through the main flow channel 105b toward the particle sorting portion 107b. The microparticle sorting in the particle sorting portion 107b is performed as described in the above "(2) First example of first embodiment (microparticle sorting flow channel unit)", and the microparticles determined to be ones to be collected are collected in the particle sorting flow channel 109b.

In the above particle sorting operation, there is a case where a flow rate flowing through the particle sorting flow channel 109a does not match a flow rate of the sample liquid b introduced into the sample liquid inlet 101b by the pump 502. For example, the former may be greater than the latter, or the former may be less than the latter. In a case where these two flow rates do not match, a fluid storage capacity in the fluid storage container 503 changes depending on a difference between these two flow rates. The fluid storage container 403 is configured so that the fluid storage capacity can be changed, whereby microparticle sorting operations in the respective microparticle sorting microchips 100a and 100b can be performed under flow rate conditions independent of each other even under a condition that these two flow rates do not match.

In a case where the flow rate flowing through the particle sorting flow channel 109a is greater than the flow rate of the sample liquid b introduced into the sample liquid inlet 101b, the sample liquid b of an amount corresponding to a difference between these two flow rates flows into the fluid storage container 503, and the fluid storage capacity in the fluid storage container 503 increases with the inflow. Due to an increase in the fluid storage capacity, the fluid storage container 403 may be inflated, or the gas filled in advance in the fluid storage container 403 may be compressed. Due to the increase in the fluid storage capacity, the flow rate of the sample liquid b introduced into the sample liquid inlet 101b of the microparticle sorting microchip b does not receive an influence by the flow rate flowing through the particle sorting flow channel 109a, and is a flow rate as controlled by the pump 502.

Furthermore, when the sample liquid b is introduced into the microparticle sorting microchip b by the pump 502, the pump 502 can generate a pulsating flow. For example, a peristaltic pump can generate a pulsating flow. The fluid storage container 503 is provided upstream of the pump 502, whereby it is suppressed that the pulsating flow generated by drive of the pump 502 gives an influence on a flow rate in the particle sorting flow channel 109a upstream of the fluid storage container 503, and moreover, it is also suppressed to give an influence on a flow rate in a flow channel further upstream in the microparticle sorting microchip a.

In a case where the flow rate flowing through the particle sorting flow channel 109a is less than the flow rate of the sample liquid b introduced into the sample liquid inlet 101b, a liquid of an amount corresponding to the difference between these two flow rates flows out from the fluid storage container 503. In this case, for example, a predetermined amount of liquid may be contained in the fluid storage container 503 prior to the start of the microparticle sorting process by the microparticle sorting flow channel unit 500. The liquid flows from the fluid storage container 503 into the particle sorting flow channel 109a downstream of the fluid storage container 503 depending on the difference between the two flow rates described above. As a result, it is suppressed that the flow rate in the particle sorting flow channel 109a upstream of the fluid storage container 503 receives an influence by the flow rate of the sample liquid b introduced into the sample liquid inlet 101b of the microparticle sorting microchip b.

Furthermore, as described above, the fluid storage container 503 is provided upstream of the pump 502, whereby it is suppressed that the pulsating flow generated by the pump 502 gives an influence on the flow rate in the particle sorting flow channel 109a upstream of the fluid storage container 503, and moreover, it is also suppressed to give an influence on the flow rate in the flow channel further upstream in the microparticle sorting microchip a.

As described above, it is possible to independently control the flow rates in the microparticle sorting microchips 100a and 100b by the fluid storage container 503.

The fluid storage container 503 may be used as a container that collects the microparticles sorted in the microparticle sorting microchip 100a, as described regarding the container 403 in the above "(2) First example of first embodiment (microparticle sorting flow channel unit)".

### (4) Third example of first embodiment (microparticle sorting flow channel unit)

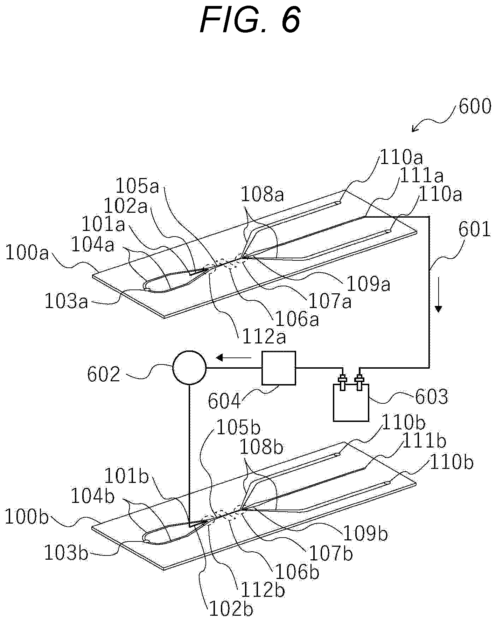

According to one embodiment of the present technology, a microparticle collection container that collects the microparticles sorted in the first microparticle sorting microchip may be provided downstream of the fluid storage container. In the embodiment, a volume of a fluid storage space in the microparticle collection container may be constant. An example of the microparticle sorting flow channel unit according to this embodiment will be described below with reference to Fig. 6. Fig. 6 is a schematic diagram of the microparticle sorting flow channel unit according to the present technology.

A microparticle sorting flow channel unit 600 illustrated in Fig. 6 is a flow channel unit in which a fluid storage container is added to the microparticle sorting flow channel unit illustrated in Fig. 3, and a microparticle collection container is further added downstream of the fluid storage container. As illustrated in Fig. 6, the microparticle sorting flow channel unit 600 includes the two microparticle sorting microchips 100a and 100b, and these microparticle sorting microchips are connected together via, for example, a flow channel connecting member 601 such as a tube. The particle sorting flow channel end 111a (that is a fluid discharge port) of the microparticle sorting microchip 100a is connected to one end of the flow channel connecting member 601, and the other end of the flow channel connecting member 601 is connected to the sample liquid inlet 101b (that is a fluid supply port) of the microparticle sorting microchip 100b. Moreover, a pump 702 is provided upstream of the sample liquid inlet 101b to introduce the sample liquid from the sample liquid inlet 101b into the microparticle sorting microchip 100b at a predetermined flow rate. The microparticle sorting microchip 100a is an upstream microparticle sorting microchip, and the microparticle sorting microchip 100b is a downstream microparticle sorting microchip.

Moreover, a fluid storage container 603 is provided downstream of the particle sorting flow channel end 111a of the microparticle sorting microchip 100a and upstream of the pump 602. Moreover, a microparticle collection container 604 is provided downstream of the fluid storage container 603 and upstream of the pump 602. That is, the fluid storage container 603 and the microparticle collection container 604 downstream thereof are provided between the particle sorting portions of the two sorting microchips 100a and 100b, that is, provided on a flow channel connecting the two particle sorting portions together. The fluid storage container 603 and the microparticle collection container 604 are configured so that a liquid can flow in from the flow channel connecting the two particle sorting portions together.

Configurations of the microparticle sorting microchips 100a and 100b are the same as the configuration of the microparticle sorting microchip 100 illustrated in Fig. 1. Each component of the microparticle sorting microchips 100a and 100b corresponds to each component in Fig. 1.

An example of the microparticle sorting operation using the microparticle sorting flow channel unit 600 will be described below.

Microparticle sorting in the microparticle sorting microchip 100a is performed as described in the above "(2) First example of first embodiment (microparticle sorting flow channel unit)", and the microparticles determined to be ones to be collected are collected in the particle sorting flow channel 109a. A liquid containing the microparticles flows through the particle sorting flow channel 109a. The liquid is used as a sample liquid in the microparticle sorting by the microparticle sorting microchip 100b (hereinafter, the liquid flowing through the particle sorting flow channel 109a toward the particle sorting flow channel end 111a is referred to as the sample liquid b).

The sample liquid b exits the microparticle sorting microchip a from the particle sorting flow channel end 111a, and further flows through the flow channel connecting member 601 toward the sample liquid inlet 101b of the microparticle sorting microchip b.

The pump 602 is provided upstream of the sample liquid inlet 101b and downstream of the particle sorting flow channel end 111a. The sample liquid b is introduced into the sample liquid inlet 101b of the microparticle sorting microchip 100b, by the pump 502. The sample liquid b merges with the sheath liquid b introduced from a sheath liquid inlet 103b at the merging portion 112b, and forms a laminar flow (hereinafter, hereinafter, the laminar flow in the microparticle sorting microchip 100b is referred to as a laminar flow b). The laminar flow b flows through the main flow channel 105b toward the particle sorting portion 107b. The microparticle sorting in the particle sorting portion 107b is performed as described in the above "(2) First example of first embodiment (microparticle sorting flow channel unit)", and the microparticles determined to be ones to be collected are collected in the particle sorting flow channel 109b.

In the above microparticle sorting operation, it is possible to independently control the flow rates in the microparticle sorting microchips 100a and 100b by the fluid storage container 603, as described in the above "(2) First example of first embodiment (microparticle sorting flow channel unit)".

Furthermore, the microparticle collection container 604 is provided downstream of the fluid storage container 603. For that reason, the fluid storage container 603 does not have to be configured so that the microparticles flowing into the inside can be taken out to the outside, and the microparticle collection container 604 may be configured so that the volume of the fluid storage space inside is constant, that is, does not have to be configured so that a difference between flow rates of the two microparticle sorting microchips can be absorbed.

### 3. Second embodiment (microparticle sorting device)

A microparticle sorting device of the present technology includes a microparticle sorting flow channel unit according to claim 1. Since the microparticle sorting flow channel unit is the one that has been described in the above "2. First embodiment (microparticle sorting flow channel unit)", the description of the microparticle sorting flow channel unit is omitted.

The microparticle sorting device of the present technology may be one that independently controls a flow rate of a fluid flowing through the first particle sorting portion and a flow rate of a fluid flowing through the second particle sorting portion. For example, with microparticle sorting device of the present technology, from microparticles sorted depending on presence or absence of a certain characteristic in the first particle sorting portion, microparticles can be further sorted depending on presence or absence of another characteristic in the second particle sorting portion. Furthermore, purity of target microparticles contained in the microparticles sorted in the first particle sorting portion can be further increased in the second particle sorting portion. The microparticle sorting device of the present technology can continuously perform such two-step sorting in one device.

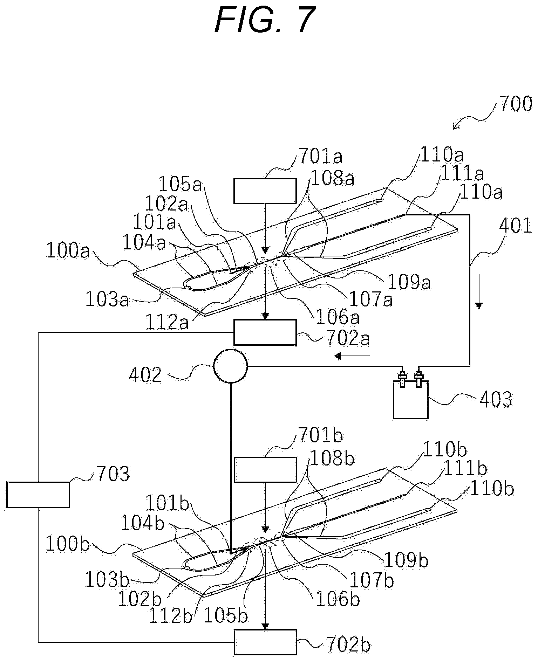

An example of the microparticle sorting device according to the present technology will be described below with reference to Fig. 7.

A microparticle sorting device 700 includes the microparticle sorting flow channel unit 400. The microparticle sorting flow channel unit 400 is as described in "(2) First example of first embodiment (microparticle sorting flow channel unit)" of 2. above.

The microparticle sorting device 700 can include a light irradiation unit 701a that irradiates microparticles flowing through the detection area 106a in the microparticle sorting microchip 100a with light, and a detection unit 702a that detects scattered light and/or fluorescence generated by the light irradiation.

The microparticle sorting device 700 can further include a light irradiation unit 701b that irradiates microparticles flowing through the detection area 106b in the microparticle sorting microchip 100b with light, and a detection unit 702b that detects scattered light and/or fluorescence generated by the light irradiation.

The microparticle sorting device 700 can include a control unit 703. The control unit 703 controls sorting of the microparticles on the basis of information regarding light detected by the detection unit 702a in the microparticle sorting microchip 100a. Furthermore, the control unit 703 also controls sorting of the microparticles on the basis of information regarding light detected by the detection unit 702b in the microparticle sorting microchip 100b.

Hereinafter, the light irradiation units 701a and 701b, the detection units 702a and 702b, and the control unit 703 will be described.

The light irradiation unit 701a irradiates the microparticles flowing through the detection area 106a in the microparticle sorting microchip with light (for example, excitation light). The light irradiation unit 701a can include a light source that emits the light, and an objective lens that collects the excitation light for the microparticles flowing through the detection area. The light source may be appropriately selected by those skilled in the art depending on an object of analysis, and may be, for example, a laser diode, an SHG laser, a solid-state laser, a gas laser, or a high-brightness LED, or a combination of two or more of them. The light irradiation unit may include another optical element as necessary, in addition to the light source and the objective lens. As described in the above "1. Related technology", the light irradiation unit 701a may be, for example, one that irradiates one position in the detection area with light, or one that irradiates each of a plurality of positions with light. For example, the light irradiation unit 701a can irradiate each of two different positions in the detection area with light.

Similarly to the light irradiation unit 701a, the light irradiation unit 701b also irradiates the microparticles flowing through the detection area 106b in the microparticle sorting microchip with light (for example, excitation light).

As described above, the microparticle sorting device of the present technology can include a first light irradiation unit that irradiates the upstream microparticle sorting microchip with light and a second light irradiation unit that irradiates the downstream microparticle sorting microchip with light. As a result, microparticle sorting by the two microparticle sorting microchips can be independently controlled.

The detection unit 702a detects the scattered light and/or fluorescence generated from the microparticles by irradiation by the light irradiation unit 701a. The detection unit 702a can include a condenser lens that collects the fluorescence and/or scattered light generated from the microparticles, and a detector. As the detector, a PMT, photodiode, CCD, CMOS, or the like can be used, but the detector is not limited thereto. The detection unit may include another optical element as necessary, in addition to the condenser lens and the detector. The detection unit can further include, for example, a spectroscopic unit. Examples of the optical component constituting the spectroscopic unit include a grating, a prism, and an optical filter. The spectroscopic unit can detect, for example, light having a wavelength to be detected separately from light having another wavelength.

Similarly to the detection unit 702a, the detection unit 702b also detects the scattered light and/or fluorescence generated by light irradiation by the light irradiation unit 701b.

As described above, the microparticle sorting device of the present technology include a first detection unit that detects light generated by light irradiation to microparticles by a light irradiation unit of the upstream microparticle sorting microchip, and a first detection unit second detection unit that detects light generated by light irradiation to microparticles by a light irradiation unit of the downstream microparticle sorting microchip. As a result, microparticle sorting by the two microparticle sorting microchips can be independently controlled.

The fluorescence detected by the detection units 702a and 702b can be, but is not limited to, fluorescence generated from the microparticles themselves and fluorescence generated from substances labeled on the microparticles, for example, fluorescent substances or the like. The scattered light detected by the detection unit may be forward scattered light, side scattered light, Rayleigh scattering, or Mie scattering, or may be a combination thereof.

The control unit 703 controls sorting of microparticles on the basis of data regarding the light detected by the detection unit 702a. For example, the control unit 703 can determine that the microparticles are to be sorted in a case where the light detected by the detection unit 702a satisfies a predetermined criterion. From the light (fluorescence and/or scattered light) detected by the detection unit 702a, information regarding the light can be generated. The information can be generated, for example, by converting the light into an electrical signal. For the generation of the information, the microparticle sorting device of the present technology can include an information generation unit that generates the information regarding the light from the light detected by the detection unit 702a. The information generation unit may be included in the control unit 703, or may be provided as a component separate from the control unit 703 in the microparticle sorting device, without being included in the control unit 703. The control unit 703 can determine whether the light detected by the detection unit 702a satisfies the predetermined criterion on the basis of the information regarding the light. The control unit 703 can control the sorting of microparticles on the basis of a result of the determination.

On the basis of the result of the determination, in a case where the microparticles are ones to be collected, the control unit 703 can change a flow in a flow channel so that the microparticles travel through the orifice into the particle sorting flow channel 109a. The change in the flow can be made, for example, by reducing the pressure in the particle sorting flow channel 109a. Furthermore, after the microparticles are collected, the control unit 703 can change the flow in the flow channel again. The flow can be changed again by increasing the pressure in the particle sorting flow channel. That is, the control unit 703 can be one that controls the pressure in the particle sorting flow channel on the basis of the information regarding the light detected by the detection unit 702a.

The control unit 703 may be one having a function similar to that of a drive unit described in Japanese Patent Application Laid-Open No. 2014-036604, for example. That is, the control unit 703 can control an actuator configured to be able to generate a negative pressure in the particle sorting flow channel 109a. In a case where it is determined that the microparticles are to be collected on the basis of the information regarding the light, the control unit 703 drives the actuator to generate the negative pressure in the particle sorting flow channel 109a. As a result, the microparticles to be collected are collected in the particle sorting flow channel 109a. In a case where it is determined that the microparticles are not to be collected on the basis of the information regarding the light, the control unit 703 does not drive the actuator. As a result, the microparticles that are not to be collected flow to the branch flow channel 108a.

The actuator may be, for example, a piezoelectric element such as a piezo element. In a case where it is determined that the microparticles are to be collected, the control unit applies a voltage that causes piezo contraction to the piezo element to increase a volume in the particle sorting flow channel 109a. Due to the increase in volume, the negative pressure is generated in the particle sorting flow channel 109a. As a result, a flow from the main flow channel to the particle sorting flow channel is formed, and the microparticles are collected in the particle sorting flow channel 109a. In the case where it is determined that the microparticles are not to be collected, the voltage is not applied. As a result, the flow to the particle sorting flow channel 109a is not formed, and the microparticles flow to the branch flow channel 108a.

The control unit 703 also controls the sorting of microparticles on the basis of data regarding the light detected by the detection unit 702b. The control may be performed similarly to the sorting control of microparticles based on the data regarding the light detected by the detection unit 702a.

### EXAMPLE

### 4. Example

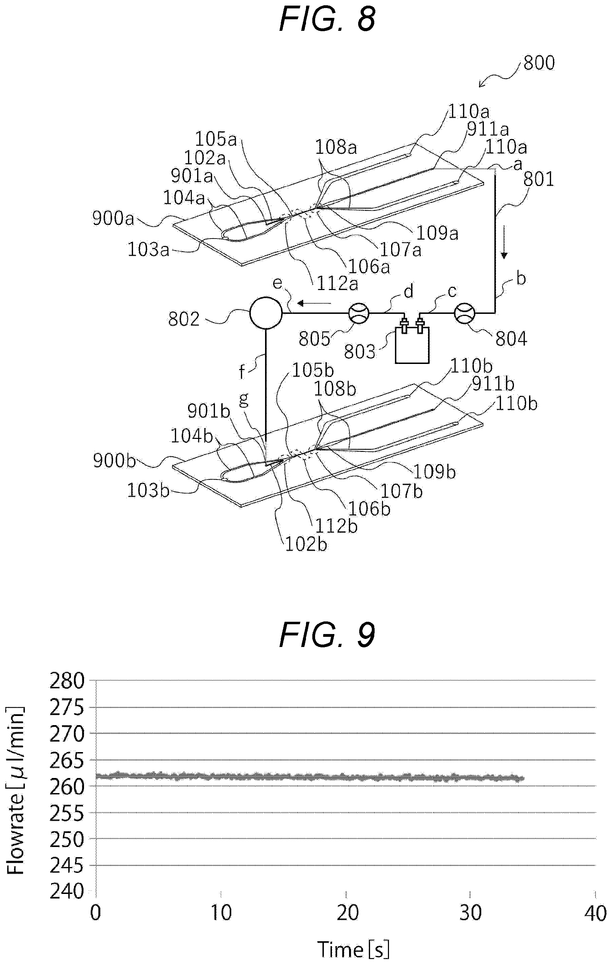

A microparticle sorting flow channel unit 800 having a configuration as illustrated in Fig. 8 was prepared. The microparticle sorting flow channel unit 800 includes an upstream microparticle sorting microchip 900a and a downstream microparticle sorting microchip 900b. These microparticle sorting microchips are ones having configurations similar to those of the microparticle sorting microchips 100a and 100b described in "(2) First example of first embodiment (microparticle sorting flow channel unit)" of 2. above.

The microparticle sorting microchips 900a and 900b are connected together via a flow channel connecting member (including a plurality of types of tubes) 801. A particle sorting flow channel end 911a of the microparticle sorting microchip 900a is connected to one end of the flow channel connecting member 801, and the other end of the flow channel connecting member 801 is connected to a sample liquid inlet 901b of the microparticle sorting microchip 900b. In the flow channel connecting members 801, sections a, c, d, e, and g illustrated in Fig. 8 were PEEK tubes having an outer diameter of 1/32 inch and an inner diameter of 0.25 mm. A section b was a PVC tube having an outer diameter of 2.1 mm and an inner diameter of 0.25 mm. Sections e and f were tubes (PharMed BPT) having an outer diameter of 3.68 mm and an inner diameter of 0.51 mm.

A pump 802 is provided upstream of the sample liquid inlet 901b to introduce a sample liquid from the sample liquid inlet 901b into the microparticle sorting microchip 900b at a predetermined flow rate. The pump 802 was a peristaltic pump.

Moreover, one fluid storage container 803 is provided downstream of the particle sorting flow channel end 911a of the microparticle sorting microchip 900a and upstream of the pump 802. That is, the fluid storage container 803 is downstream of the first particle sorting portion 107a and is provided upstream of the second particle sorting portion 107. The fluid storage container 803 was a PE film bag inflatable to a volume of up to 140 ml.

Flow rate measuring devices 804 and 805 are provided upstream and downstream of the fluid storage container 803, respectively. Both the flow rate measuring devices 804 and 805 were SLI-1000 (manufactured by Sensirion AG) .

Distilled water was caused to flow into the upstream microparticle sorting microchips 900a and 900b under the following conditions.

### <Upstream microparticle sorting microchip 900a>

Pressure to introduce liquid from the sheath liquid inlet 103a: 120 kPa
Pressure to introduce liquid from a gate flow inlet 121a: 130 kPa
Flow rate of liquid introduced into a sample liquid inlet 901a: 100 µl/min
Back pressure at a branch flow channel end 110a: Atmospheric pressure
Flow rate flowing through the microparticle sorting flow channel 109a: Measured by the flow rate measuring device 804

No suction operation was performed into the microparticle sorting flow channel 109a. That is, a liquid introduced from the gate flow inlet 121a was flowing from the microparticle sorting flow channel 109a to the downstream flow channel.

### <Downstream microparticle sorting microchip 900b>

Pressure to introduce liquid from the sheath liquid inlet 103b: 120 kPa
Pressure to introduce liquid from a gate flow inlet 121b: 130 kPa
Flow rate of liquid introduced into the sample liquid inlet 901b: Measured by flow rate measuring device 805
Back pressure at a branch flow channel end 110b: Atmospheric pressure
Back pressure at a microparticle sorting flow channel end 911b: Atmospheric pressure
Flow rate flowing through the microparticle sorting flow channel 109b: 260 µl/min
No suction operation was performed into the microparticle sorting flow channel 109b.

Figs. 9 and 10 illustrate flow rates measured by the flow rate measuring devices 804 and 805 in a case where distilled water was caused to flow under the conditions described above. As illustrated in Fig. 10, a pulsating flow was measured by the flow rate measuring device 805. That is, the pulsating flow was generated by the pump 802. On the other hand, as illustrated in Fig. 9, the flow rate measured by the flow rate measuring device 804 was constant. For that reason, it can be seen that the pulsating flow generated by drive of the pump 802 does not give an influence on the flow rate upstream of the fluid storage container 803.

Furthermore, as illustrated in Fig. 9, the flow rate measured by the flow rate measuring device 804 was about 260 µl/min, whereas as illustrated in Fig. 10, the flow rate measured by the flow rate measuring device 805 was about 70 µl/min, excluding a period during which the pulsating flow was generated. That is, the upstream flow rate and the downstream flow rate of the fluid storage container 803 are significantly different from each other. Despite such a difference in flow rate, the flow rate of the liquid introduced into the sample liquid inlet 901b of the microparticle sorting microchip 900b was as controlled by the pump 802. Thus, it can be seen that it is possible to independently control, by the fluid storage container 803, the flow rate (in particular, the flow rate flowing through the microparticle sorting flow channel 109a) in the upstream microparticle sorting microchip 900a, and the flow rate (in particular, the flow rate of the liquid introduced into the sample liquid inlet 901b) in the downstream microparticle sorting microchip 900b.

In the above microparticle sorting operation, no suction was performed into the particle sorting flow channel in both the microparticle sorting microchip 900a and the microparticle sorting microchip 900b. However, a flow rate fluctuation due to the suction is extremely small. For that reason, it is clear that the suction in one microparticle sorting microchip does not give an influence on the flow rate in the flow channel of the other microparticle sorting microchip.

### REFERENCE SIGNS LIST

- 400: Microparticle sorting flow channel unit
- 401: Flow channel connecting member
- 402: Pump
- 403: Fluid storage container
- 100a, 100b: Microparticle sorting microchip
- 107a, 107b: Particle sorting portion

## Claims

1. A microparticle sorting flow channel unit comprising:
a first particle sorting portion (100a);
a fluid storage container (403, 603, 803) that is downstream of the first particle sorting portion and is enabled to store a fluid; and
a second particle sorting portion (100b, 900b) that is downstream of the fluid storage container, wherein
the fluid storage container is fluidly connected to at least one fluid discharge port that is downstream of the first particle sorting portion and at least one fluid supply port that is upstream of the second particle sorting portion, and
**characterized in that**:
the fluid storage container is configured to inflate to cause a fluid storage capacity in the container to increase depending on a difference between flow rates before and after the container.

2. The microparticle sorting flow channel unit according to claim 1, wherein the fluid storage container suppresses an influence on a flow rate in a flow channel downstream or upstream of the fluid storage container due to a flow rate fluctuation in the flow channel upstream or downstream of the fluid storage container.

3. The microparticle sorting flow channel unit according to claim 1, wherein
the microparticle sorting flow channel unit includes a first microparticle sorting microchip and a second microparticle sorting microchip, and
the first particle sorting portion is provided in the first microparticle sorting microchip, and the second particle sorting portion is provided in the second microparticle sorting microchip.

4. The microparticle sorting flow channel unit according to claim 1, wherein
a pump is provided between the fluid discharge port and the fluid supply port, and
the fluid storage container is provided upstream of the pump.

5. The microparticle sorting flow channel unit according to claim 1, wherein the fluid storage container is configured to independently control a flow rate of a fluid flowing through the first particle sorting portion and a flow rate of a fluid flowing through the second particle sorting portion.

6. The microparticle sorting flow channel unit according to claim 1, wherein the fluid storage container is configured to reduce an influence due to a pulsating flow of a fluid flowing through any one particle sorting portion of the first particle sorting portion or the second particle sorting portion on a flow rate in another particle sorting portion.

7. The microparticle sorting flow channel unit according to claim 1, wherein
the microparticle sorting flow channel unit includes an upstream microparticle sorting microchip and a downstream microparticle sorting microchip,
the upstream microparticle sorting microchip is provided with the first particle sorting portion and the at least one fluid discharge port,
the downstream microparticle sorting microchip is provided with the second particle sorting portion and the at least one fluid supply port, and
the fluid storage container is provided on a flow channel fluidly connecting the at least one fluid discharge port and the at least one fluid supply port together.

8. The microparticle sorting flow channel unit according to claim 1, wherein the fluid storage container is configured as a container that collects microparticles sorted in the first particle sorting portion.

9. The microparticle sorting flow channel unit according to claim 1, wherein a microparticle collection container that collects microparticles sorted in the first particle sorting portion is provided downstream of the fluid storage container.

10. The microparticle sorting flow channel unit according to claim 9, wherein a volume of a fluid storage space in the microparticle collection container is constant.

11. The microparticle sorting flow channel unit according to claim 1, wherein
the microparticle sorting flow channel unit includes an upstream microparticle sorting microchip provided with the first particle sorting portion and a downstream microparticle sorting microchip provided with the second particle sorting portion, and
the fluid storage container is provided in any one microchip of the two microparticle sorting microchips.

12. The microparticle sorting flow channel unit according to claim 1, wherein
at least one particle sorting portion of the first particle sorting portion or the second particle sorting portion includes
a main flow channel through which a fluid containing microparticles flows,
a branch flow channel that branches from the main flow channel, and
a particle sorting flow channel coaxial with the main flow channel.

13. The microparticle sorting flow channel unit according to claim 1, wherein the fluid storage container is configured to store a fluid of an amount greater than or equal to a value obtained by multiplying an absolute value of a difference between flow rates before and after the container by a time for which a fluid flows in the microparticle sorting flow channel unit.

14. A microparticle sorting device comprising a microparticle sorting flow channel unit according to any preceding claim.

15. The microparticle sorting device according to claim 14, wherein a flow rate of a fluid flowing through the first particle sorting portion and a flow rate of a fluid flowing through the second particle sorting portion are independently controlled.

## Patentansprüche

1. Strömungskanaleinheit zum Sortieren von Mikropartikeln, umfassend:
einen ersten Partikelsortierabschnitt (100a);
einen Fluidlagerbehälter (403, 603, 803), der sich stromabwärts des ersten Partikelsortierabschnitts befindet und in der Lage ist, ein Fluid zu lagern; und
einen zweiten Partikelsortierabschnitt (100b, 900b), der sich stromabwärts des Fluidlagerbehälters befindet, wobei
der Fluidlagerbehälter mit mindestens einer Fluidauslassöffnung, die sich stromabwärts des ersten Partikelsortierabschnitts befindet, und mit mindestens einer Fluidzufuhröffnung, die sich stromaufwärts des zweiten Partikelsortierabschnitts befindet, fluidisch verbunden ist und
**dadurch gekennzeichnet, dass:**
der Fluidlagerbehälter konfiguriert ist, um sich aufzublähen, um zu bewirken, dass eine Fluidlagerkapazität in dem Behälter sich abhängig von einer Differenz zwischen den Durchflussmengen vor und nach dem Behälter erhöht.

2. Strömungskanaleinheit zum Sortieren von Mikropartikeln nach Anspruch 1, wobei der Fluidlagerbehälter einen Einfluss auf eine Durchflussmenge in einem Strömungskanal stromabwärts oder stromaufwärts des Fluidlagerbehälters aufgrund einer Durchflussmengenschwankung in dem Strömungskanal stromaufwärts oder stromabwärts des Fluidlagerbehälters unterdrückt.

3. Strömungskanaleinheit zum Sortieren von Mikropartikeln nach Anspruch 1, wobei
die Strömungskanaleinheit zum Sortieren von Mikropartikeln einen ersten Mikrochip zum Sortieren von Mikropartikeln und einen zweiten Mikrochip zum Sortieren von Mikropartikeln umfasst und
der erste Partikelsortierabschnitt in dem ersten Mikrochip zum Sortieren von Mikropartikeln bereitgestellt ist und der zweite Partikelsortierabschnitt in dem zweiten Mikrochip zum Sortieren von Mikropartikeln bereitgestellt ist.

4. Strömungskanaleinheit zum Sortieren von Mikropartikeln nach Anspruch 1, wobei
eine Pumpe zwischen der Fluidauslassöffnung und der Fluidzufuhröffnung bereitgestellt ist und
der Fluidlagerbehälter stromaufwärts der Pumpe bereitgestellt ist.

5. Strömungskanaleinheit zum Sortieren von Mikropartikeln nach Anspruch 1, wobei der Fluidlagerbehälter konfiguriert ist, um unabhängig eine Durchflussmenge eines durch den ersten Partikelsortierabschnitt fließenden Fluids und eine Durchflussmenge eines durch den zweiten Partikelsortierabschnitt fließenden Fluids zu steuern.

6. Strömungskanaleinheit zum Sortieren von Mikropartikeln nach Anspruch 1, wobei der Fluidlagerbehälter konfiguriert ist, um einen Einfluss aufgrund einer pulsierenden Strömung eines durch einen beliebigen Partikelsortierabschnitt des ersten Partikelsortierabschnitts oder des zweiten Partikelsortierabschnitts strömenden Fluids auf eine Durchflussmenge in einem anderen Partikelsortierabschnitt zu verringern.

7. Strömungskanaleinheit zum Sortieren von Mikropartikeln nach Anspruch 1, wobei
die Strömungskanaleinheit zum Sortieren von Mikropartikeln einen stromaufwärtigen Mikrochip zum Sortieren von Mikropartikeln und einen stromabwärtigen Mikrochip zum Sortieren von Mikropartikeln einschließt,
der stromaufwärtige Mikrochip zum Sortieren von Mikropartikeln mit dem ersten Partikelsortierabschnitt und der mindestens einen Fluidauslassöffnung bereitgestellt ist,
der stromabwärtige Mikrochip zum Sortieren von Mikropartikeln mit dem zweiten Partikelsortierabschnitt und der mindestens einen Fluidzufuhröffnung bereitgestellt ist und
der Fluidlagerbehälter an einem Strömungskanal bereitgestellt ist, der die mindestens eine Fluidauslassöffnung und die mindestens eine Fluidzufuhröffnung miteinander verbindet.

8. Strömungskanaleinheit zum Sortieren von Mikropartikeln nach Anspruch 1, wobei der Fluidlagerbehälter als ein Behälter konfiguriert ist, der die in dem ersten Partikelsortierabschnitt sortierten Mikropartikel sammelt.

9. Strömungskanaleinheit zum Sortieren von Mikropartikeln nach Anspruch 1, wobei ein Mikropartikelsammelbehälter, der die in dem ersten Partikelsortierabschnitt sortierten Mikropartikel sammelt, stromabwärts des Fluidlagerbehälters bereitgestellt ist.

10. Strömungskanaleinheit zum Sortieren von Mikropartikeln nach Anspruch 9, wobei ein Volumen eines Fluidlagerraums in dem Mikropartikelsammelbehälter konstant ist.

11. Strömungskanaleinheit zum Sortieren von Mikropartikeln nach Anspruch 1, wobei
die Strömungskanaleinheit zum Sortieren von Mikropartikeln einen stromaufwärtigen Mikrochip zum Sortieren von Mikropartikeln mit dem ersten Partikelsortierabschnitt und einen stromabwärtigen Mikrochip zum Sortieren von Mikropartikeln mit dem zweiten Partikelsortierabschnitt umfasst, und
der Fluidlagerbehälter in einem beliebigen der zwei Mikrochips zum Sortieren von Mikropartikeln bereitgestellt ist.

12. Strömungskanaleinheit zum Sortieren von Mikropartikeln nach Anspruch 1, wobei
mindestens ein Partikelsortierabschnitt des ersten Partikelsortierabschnitts oder des zweiten Partikelsortierabschnitts einschließt:
einen Hauptströmungskanal, durch den ein mikropartikelhaltiges Fluid strömt,
einen Abzweigströmungskanal, der von dem Hauptströmungskanal abzweigt, und
einen mit dem Hauptströmungskanal koaxialen Partikelsortierströmungskanal.

13. Strömungskanaleinheit zum Sortieren von Mikropartikeln nach Anspruch 1, wobei der Fluidlagerbehälter konfiguriert ist, um ein Fluid einer Menge zu lagern, die größer als oder gleich einem Wert ist, der durch Multiplizieren eines Absolutwerts einer Differenz zwischen den Durchflussmengen vor und nach dem Behälter in einer Zeit, während der ein Fluid in der Strömungskanaleinheit zum Sortieren von Mikropartikeln strömt, erhalten wird.

14. Mikropartikelsortiervorrichtung, umfassend eine Strömungskanaleinheit zum Sortieren von Mikropartikeln nach einem der vorstehenden Ansprüche.

15. Mikropartikelsortiervorrichtung nach Anspruch 14, wobei eine Durchflussmenge eines durch den ersten Partikelsortierabschnitt fließenden Fluids und eine Durchflussmenge eines durch den zweiten Partikelsortierabschnitt fließenden Fluids unabhängig voneinander gesteuert werden.

## Revendications

1. Unité de canal d'écoulement de tri de microparticules comprenant :
une première partie de tri de particules (100a) ;
un récipient de stockage de fluide (403, 603, 803) qui est en aval de la première partie de tri de particules et est habilité à stocker un fluide ; et
une seconde partie de tri de particules (100b, 900b) qui est en aval du récipient de stockage de fluide, dans laquelle
le récipient de stockage de fluide est raccordé fluidiquement à au moins un orifice de décharge de fluide qui est en aval de la première partie de tri de particules et au moins un orifice d'alimentation en fluide qui est en amont de la seconde partie de tri de particules, et **caractérisée en ce que** :
le récipient de stockage de fluide est configuré pour gonfler pour amener une capacité de stockage de fluide dans le récipient à augmenter en fonction d'une différence entre les débits avant et après le récipient.

2. Unité de canal d'écoulement de tri de microparticules selon la revendication 1, dans laquelle le récipient de stockage de fluide supprime une influence sur un débit dans un canal d'écoulement en aval ou en amont du récipient de stockage de fluide en raison d'une fluctuation de débit dans le canal d'écoulement en amont ou en aval du récipient de stockage de fluide.

3. Unité de canal d'écoulement de tri de microparticules selon la revendication 1, dans laquelle
l'unité de canal d'écoulement de tri de microparticules comporte une première micropuce de tri de microparticules et une seconde micropuce de tri de microparticules, et
la première partie de tri de particules est fournie dans la première micropuce de tri de microparticules, et la seconde partie de tri de particules est fournie dans la seconde micropuce de tri de microparticules.

4. Unité de canal d'écoulement de tri de microparticules selon la revendication 1, dans laquelle
une pompe est fournie entre l'orifice de décharge de fluide et l'orifice d'alimentation en fluide, et
le récipient de stockage de fluide est fourni en amont de la pompe.

5. Unité de canal d'écoulement de tri de microparticules selon la revendication 1, dans laquelle le récipient de stockage de fluide est configuré pour commander indépendamment un débit d'un fluide s'écoulant à travers la première partie de tri de particules et un débit d'un fluide s'écoulant à travers la seconde partie de tri de particules.

6. Unité de canal d'écoulement de tri de microparticules selon la revendication 1, dans laquelle le récipient de stockage de fluide est configuré pour réduire une influence en raison d'un écoulement pulsatoire d'un fluide s'écoulant à travers l'une quelconque partie de tri de particules parmi la première partie de tri de particules ou la seconde partie de tri de particules sur un débit dans une autre partie de tri de particules.

7. Unité de canal d'écoulement de tri de microparticules selon la revendication 1, dans laquelle
l'unité de canal d'écoulement de tri de microparticules comporte une micropuce de tri de microparticules en amont et une micropuce de tri de microparticules en aval,
la micropuce de tri de microparticules en amont est pourvue de la première partie de tri de particules et de l'au moins un orifice de décharge de fluide,
la micropuce de tri de microparticules en aval est pourvue de la seconde partie de tri de particules et de l'au moins un orifice d'alimentation en fluide, et
le récipient de stockage de fluide est fourni sur un canal d'écoulement raccordant fluidiquement l'au moins un orifice de décharge de fluide et l'au moins un orifice d'alimentation en fluide ensemble.

8. Unité de canal d'écoulement de tri de microparticules selon la revendication 1, dans laquelle le récipient de stockage de fluide est configuré en tant que récipient qui collecte des microparticules triées dans la première partie de tri de particules.

9. Unité de canal d'écoulement de tri de microparticules selon la revendication 1, dans laquelle un récipient de collecte de microparticules qui collecte des microparticules triées dans la première partie de tri de particules est fourni en aval du récipient de stockage de fluide.

10. Unité de canal d'écoulement de tri de microparticules selon la revendication 9, dans laquelle un volume d'un espace de stockage de fluide dans le récipient de collecte de microparticules est constant.

11. Unité de canal d'écoulement de tri de microparticules selon la revendication 1, dans laquelle
l'unité de canal d'écoulement de tri de microparticules comporte une micropuce de tri de microparticules en amont pourvue de la première partie de tri de particules et une micropuce de tri de microparticules en aval pourvue de la seconde partie de tri de particules, et
le récipient de stockage de fluide est fourni dans l'une quelconque micropuce parmi les deux micropuces de tri de microparticules.

12. Unité de canal d'écoulement de tri de microparticules selon la revendication 1, dans laquelle
au moins une partie de tri de particules de la première partie de tri de particules ou de la seconde partie de tri de particules comporte
un canal d'écoulement principal à travers lequel s'écoule un fluide contenant des microparticules,
un canal d'écoulement de ramification qui se ramifie à partir du canal d'écoulement principal, et
un canal d'écoulement de tri de particules coaxial par rapport au canal d'écoulement principal.

13. Unité de canal d'écoulement de tri de microparticules selon la revendication 1, dans laquelle le récipient de stockage de fluide est configuré pour stocker un fluide d'une quantité supérieure ou égale à une valeur obtenue en multipliant une valeur absolue d'une différence entre les débits avant et après le récipient par un temps pendant lequel un fluide s'écoule dans l'unité de canal d'écoulement de tri de microparticules.

14. Dispositif de tri de microparticules comprenant une unité de canal d'écoulement de tri de microparticules selon l'une quelconque revendication précédente.

15. Dispositif de tri de microparticules selon la revendication 14, dans lequel un débit d'un fluide s'écoulant à travers la première partie de tri de particules et un débit d'un fluide s'écoulant à travers la seconde partie de tri de particules sont commandés indépendamment.
